# EUROPÄISCHE PATENTSCHRIFT

(11) **EP 3 171 054 B1**
(45) Veröffentlichungstag und Bekanntmachung des Hinweises auf die Patenterteilung: **02.12.2020**
(21) Anmeldenummer: 15187090.4
(22) Anmeldetag: 28.09.2015
(51) Int. Cl.: F16H 3/66, B60K 6/365, B60K 6/547, B60K 6/48

(54) **GETRIEBE FÜR EIN KRAFTFAHRZEUG, SOWIE ANTRIEBSSTRANG FÜR EIN KRAFTFAHRZEUG**
TRANSMISSION FOR A MOTOR VEHICLE, AND POWER TRAIN FOR A MOTOR VEHICLE
BOITE DE VITESSES D'UN VEHICULE AUTOMOBILE ET TRANSMISSION POUR UN VEHICULE AUTOMOBILE

(43) Veröffentlichungstag der Anmeldung: 24.05.2017
(73) Patentinhaber: ZF Friedrichshafen AG, 88046 Friedrichshafen (DE)
(72) Erfinder: Beck, Stefan, 88097 Eriskirch (DE); Horn, Matthias, 88069 Tettnang (DE); Brehmer, Martin, 88069 Tettnang (DE); Kaltenbach, Johannes, 88048 Friedrichshafen (DE); King, Julian, 6830 Rankweil (AT); Moraw, Jens, 88046 Friedrichshafen (DE); Münch, Eckehard, 32257 Bünde (DE); Niederbrucker, Gerhard, 88046 Friedrichshafen (DE); Pawlakowitsch, Juri, 88263 Horgenzell (DE); Scharr, Stephan, 88045 Friedrichshafen (DE); Warth, Viktor, 88048 Friedrichshafen (DE); Wechs, Michael, 88138 Weißensberg (DE); Ziemer, Peter, 88069 Tettnang (DE); Griesmeier, Uwe, 88677 Markdorf (DE); Kuberczyk, Raffael, 88212 Ravensburg (DE)
(74) Vertreter: ZF Friedrichshafen AG

(56) Entgegenhaltungen:
- DE-T2- 69 003 827
- Thomas Belz: "Varianten von Mehrgang-Planetengetrieben", , 8 March 2016 (2016-03-08), XP055257458, Retrieved from the Internet: URL:https://register.epo.org/application?d ocumentId=EYPWMGE67270DSU&appnumber=EP1375 6488&showPdfPage=all [retrieved on 2016-03-11]

## Beschreibung

Die Erfindung betrifft ein Getriebe für ein Kraftfahrzeug, sowie einen Antriebsstrang für ein Kraftfahrzeug mit einem solchen Getriebe. Ein Getriebe bezeichnet hier insbesondere ein mehrgängiges Getriebe, bei dem eine Vielzahl von Gängen, also feste Übersetzungsverhältnisse zwischen der Antriebswelle und der Abtriebswelle des Getriebes, durch Schaltelemente vorzugsweise automatisch schaltbar sind. Bei den Schaltelementen handelt es sich hier beispielsweise um Kupplungen oder Bremsen. Derartige Getriebe finden vor allem in Kraftfahrzeugen Anwendung, um die Drehzahl- und Drehmomentabgabecharakteristik der Antriebseinheit den Fahrwiderständen des Fahrzeugs in geeigneter Weise anzupassen.

Die Patentanmeldung DE 199 12 480 A1 der Anmelderin beschreibt ein automatisch schaltbares Kraftfahrzeuggetriebe mit drei Einsteg-Planetensätzen, drei Bremsen und zwei Kupplungen zum Schalten von sechs Vorwärtsgängen und einem Rückwärtsgang, sowie einer Antriebswelle und einer Abtriebswelle. Die Antriebswelle ist direkt mit dem Sonnenrad des zweiten Planetensatzes verbunden, und über die erste Kupplung mit dem Sonnenrad des ersten Planetensatzes und über die zweite Kupplung mit dem Steg des ersten Planetensatzes verbindbar. Das Sonnenrad des ersten Planetensatzes ist über die erste Bremse, der Steg des ersten Planetensatzes über die zweite Bremse und das Sonnenrad des dritten Planetensatzes über die dritte Bremse mit dem Gehäuse verbindbar. Der Steg des ersten Planetensatzes ist mit dem Hohlrad des zweiten Planetensatzes verbunden. Der Steg des zweiten Planetensatzes ist mit dem Hohlrad des dritten Planetensatzes verbunden. Das Hohlrad des ersten Planetensatzes ist mit dem Steg des dritten Planetensatzes und mit der Abtriebswelle verbunden. Zusätzlich können Freiläufe an jeder Stelle des Getriebes eingesetzt werden, beispielsweise zwischen einer Welle und dem Gehäuse.

Die Patentanmeldung DE 101 62 873 A1 der Anmelderin zeigt in Fig. 3 ein Mehrstufengetriebe in Planetenbauweise, dessen Aufbau zu dem oben angeführten Getriebe sehr ähnlich ist. Die direkte Verbindung zwischen der Antriebswelle und dem Sonnenrad des zweiten Planetenradsatzes ist durch eine schaltbare Verbindung ersetzt, indem eine zusätzliche Kupplung bereitgestellt wird.

DE 690 03 827 T2 offenbart in seiner Fig.1 ein Getriebe für ein Kraftfahrzeug, wobei das Getriebe eine Antriebswelle, eine Abtriebswelle, einen ersten, zweiten und dritten Planetenradsatz sowie ein erstes, zweites, drittes, viertes, fünftes und sechstes Schaltelement aufweist, wobei die Planetenradsätze je ein erstes Element, ein zweites Element und ein drittes Element aufweisen, wobei das erste Element durch ein Sonnenrad des jeweiligen Planetenradsatzes gebildet ist, wobei das zweite Element des jeweils als Minus-Radsatz ausgebildeten ersten und dritten Planetenradsatzes durch einen Steg und das zweite Element des als Plus-Radsatz ausgebildeten zweiten Planetenradsatzes durch ein Hohlrad gebildet ist, wobei das dritte Element des jeweils als Minus-Radsatz ausgebildeten ersten und dritten Planetenradsatzes durch das Hohlrad und das dritte Element des als Plus-Radsatz ausgebildeten zweiten Planetenradsatzes durch den Steg gebildet ist, wobei die Abtriebswelle mit dem zweiten Element des dritten Planetenradsatzes ständig verbunden ist.

Es ist Aufgabe der Erfindung, die im Stand der Technik bekannten Getriebe weiterzuentwickeln, sodass zumindest sieben Vorwärtsgänge zur Verfügung stehen. Die Aufgabe wird gelöst durch die Merkmale des Patentanspruchs 1. Vorteilhafte Ausgestaltungen ergeben sich aus den Unteransprüchen, der Beschreibung sowie aus den Figuren.

Das erfindungsgemäße Getriebe weist eine Antriebswelle, eine Abtriebswelle, drei Planetenradsätze, sowie sechs Schaltelemente auf. Ein Planetenradsatz umfasst ein Sonnenrad, einen Steg und ein Hohlrad. An dem Steg drehbar gelagert sind Planetenräder, welche mit der Verzahnung des Sonnenrades und/oder mit der Verzahnung des Hohlrads kämmen. Ein Minus-Radsatz bezeichnet einen Planetenradsatz mit einem Steg, an dem die Planetenräder drehbar gelagert sind, mit einem Sonnenrad und mit einem Hohlrad, wobei die Verzahnung zumindest eines der Planetenräder sowohl mit der Verzahnung des Sonnenrades, als auch mit der Verzahnung des Hohlrades kämmt, wodurch das Hohlrad und das Sonnenrad in entgegengesetzte Drehrichtungen rotieren, wenn das Sonnenrad bei feststehendem Steg rotiert. Ein Plus-Radsatz unterscheidet sich zu dem gerade beschriebenen Minus-Planetenradsatz dahingehend, dass der Plus-Radsatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Steg das Hohlrad und das Sonnenrad in die gleiche Drehrichtung rotieren.

Jeder der drei Planetenradsätze weist ein erstes, zweites und drittes Element auf. Das erste Element wird stets durch das Sonnenrad des jeweiligen Planetenradsatzes gebildet. Bei einer Ausbildung als Minus-Radsatz wird das zweite Element durch den Steg des jeweiligen Planetenradsatzes gebildet, und das dritte Element durch das Hohlrad des jeweiligen Planetenradsatzes. Bei einer Ausbildung als Plus-Radsatz wird das zweite Element durch das Hohlrad des jeweiligen Planetenradsatzes gebildet, und das dritte Element durch den Steg des jeweiligen Planetenradsatzes. Wird ein Minus-Radsatz durch einen Plus-Radsatz ersetzt, so ist neben der veränderten Anbindung der Elemente Steg und Hohlrad der Betrag der Standgetriebeübersetzung um den Wert Eins zu erhöhen, um dieselbe Übersetzungswirkung zu erzielen.

Die Abtriebswelle ist mit dem dritten Element des ersten Planetenradsatzes und mit dem zweiten Element des dritten Planetenradsatzes ständig verbunden. Das erste Element des ersten Planetenradsatzes ist mit dem ersten Element des zweiten Planetenradsatzes ständig verbunden.

Das Getriebe weist eine erste Koppelung und eine zweite Koppelung auf. Die erste Koppelung besteht zwischen dem ersten Element des dritten Planetenradsatzes und einem drehfesten Bauelement des Getriebes, beispielsweise dem Getriebegehäuse. Die zweite Koppelung besteht zwischen dem zweiten Element des zweiten Planetenradsatzes und dem dritten Element des dritten Planetenradsatzes. Eine der beiden Koppelungen ist durch eine ständige drehfeste Verbindung gebildet, während die verbleibende der beiden Koppelungen durch eine mittels des ersten Schaltelements schaltbare Verbindung gebildet ist. Durch Schließen des ersten Schaltelements wird somit eine Drehmomentübertragung zwischen den Elementen des dritten Planetenradsatzes ermöglicht.

Durch Schließen des zweiten Schaltelements ist das erste Element des ersten Planetenradsatzes drehfest festsetzbar, und damit auch das mit diesem Element verbundene erste Element des zweiten Planetenradsatzes. Durch Schließen des dritten Schaltelements ist das zweite Element des ersten Planetenradsatzes drehfest festsetzbar. Durch Schließen des vierten Schaltelements ist die Antriebswelle mit dem zweiten Element des zweiten Planetenradsatzes verbindbar. Durch Schließen des fünften Schaltelements ist die Antriebswelle mit dem dritten Element des zweiten Planetenradsatzes verbindbar. Durch Schließen des sechsten Schaltelements ist das zweite Element des ersten Planetenradsatzes mit dem dritten Element des zweiten Planetenradsatzes verbindbar.

Ein Getriebe mit dieser erfindungsgemäßen Zuordnung der einzelnen Getriebeelemente ermöglicht die Bildung von sieben Vorwärtsgängen, was nachfolgend detailliert beschrieben wird. Zudem weist ein solches Getriebe einen kompakten Aufbau, geringe Bauteilbelastungen sowie einen guten Verzahnungswirkungsgrad auf.

Vorzugsweise sind der erste und der dritte Planetenradsatz jeweils als ein Minus-Radsatz ausgebildet, wobei der zweite Planetenradsatz als ein Plus-Radsatz ausgebildet ist. Dies vereinfacht den Aufbau des Getriebes.

Durch selektives Schließen von drei der sechs Schaltelemente sind sieben Vorwärtsgänge zwischen der Antriebswelle und der Abtriebswelle darstellbar. Der erste Vorwärtsgang wird durch Schließen des ersten Schaltelements, des dritten Schaltelements und des fünften Schaltelements gebildet. Der zweite Vorwärtsgang wird durch Schließen des ersten Schaltelements, des zweiten Schaltelements und des fünften Schaltelements gebildet. Der dritte Vorwärtsgang wird durch Schließen des ersten Schaltelements, des vierten Schaltelements und einem weiteren der sechs Schaltelemente gebildet, also dem zweiten, dritten, fünften oder sechsten Schaltelement. Es bestehen somit vier Möglichkeiten zur Bildung des dritten Vorwärtsganges. Durch Schließen des ersten und des vierten Schaltelements ist das Drehzahlverhältnis zwischen Antriebswelle und Abtriebswelle bereits festgelegt. Durch Schließen eines weiteren Schaltelements werden auch die Drehzahlverhältnisse der Elemente des ersten und zweiten Planetenradsatzes festgelegt. Der vierte Vorwärtsgang wird durch Schließen des ersten Schaltelements, des fünften Schaltelements und des sechsten Schaltelements gebildet. Der fünfte Vorwärtsgang wird durch Schließen des vierten Schaltelements, des fünften Schaltelements und des sechsten Schaltelements gebildet. Der sechste Vorwärtsgang wird durch Schließen des zweiten Schaltelements, des fünften Schaltelements und des sechsten Schaltelements gebildet. Der siebente Vorwärtsgang wird durch Schließen des zweiten Schaltelements, des vierten Schaltelements und des sechsten Schaltelements gebildet. Dadurch wird, bei geeigneter Wahl der Standgetriebeübersetzungen der Planetenradsätze, eine für die Anwendung im Kraftfahrzeug gut geeignete Übersetzungsreihe erzielt. Zudem weisen zwei benachbarte Vorwärtsgänge stets zwei Schaltelemente auf, welche in beiden diesen Gängen geschlossen sind. Dies vereinfacht den Schaltvorgang und verkürzt die Schaltdauer zwischen benachbarten Vorwärtsgängen. Ein solcher vereinfachter Schaltvorgang ist auch zwischen dem vierten und sechsten Vorwärtsgang möglich, da in beiden diesen Vorwärtsgängen das fünfte und sechste Schaltelement geschlossen sind. Besonders bevorzugt ist das fünfte Schaltelement an der Bildung des dritten Vorwärtsganges beteiligt, da das fünfte Schaltelement somit in den ersten sechs Vorwärtsgängen stets geschlossen bleiben kann. Dies ermöglicht zudem einen vereinfachten Schaltvorgang zwischen jedem der ersten vier Vorwärtsgänge, da in diesen Vorwärtsgängen das erste und das fünfte Schaltelement geschlossen sind.

Vorzugsweise wird ein erster Rückwärtsgang zwischen der Antriebswelle und der Abtriebswelle durch Schließen des dritten Schaltelemente, des vierten Schaltelements und des fünften Schaltelements gebildet. Da im ersten Vorwärtsgang ebenso das dritte und fünfte Schaltelement geschlossen sind, ist ein Umschaltvorgang zwischen Vorwärtsgang und erstem Rückwärtsgang besonders einfach darstellbar. Ergänzend oder alternativ zum ersten Rückwärtsgang ist ein zweiter Rückwärtsgang durch Schließen des dritten Schaltelements, des vierten Schaltelements und des sechsten Schaltelements ausbildbar.

Prinzipiell kann jedes der sechs Schaltelemente als formschlüssiges Schaltelement, also beispielsweise als Klauenkupplung, oder als kraftschlüssiges Schaltelement ausgebildet sein, also beispielsweise als Lamellenkupplung. Vorzugsweise ist das dritte Schaltelement und/oder das fünfte Schaltelement als formschlüssiges Schaltelement ausgebildet. Formschlüssige Schaltelemente stellen im geschlossenen Zustand die Verbindung durch Formschluss her, und zeichnen sich im geöffneten Zustand durch geringere Schleppverluste als kraftschlüssige Schaltelemente aus. Durch die im geöffneten Zustand geringen Schleppverluste wird der Wirkungsgrad des Getriebes verbessert, besonders da das dritte Schaltelement lediglich im ersten der sieben Vorwärtsgange geschlossen sein muss, sofern es nicht zur Bildung des dritten Vorwärtsganges beiträgt. Bei Verwendung des Getriebes im Kraftfahrzeug-Antriebsstrang ist das dritte Schaltelement daher überwiegend geöffnet. Der mechanische Wirkungsgrad des Kraftfahrzeug-Antriebsstranges kann somit verbessert werden. Ist das fünfte Schaltelement als formschlüssiges Schaltelement ausgebildet, so wird zur Bildung des dritten Vorwärtsganges bevorzugt jene Variante ausgewählt, bei der das fünfte Schaltelement geschlossen bleibt. Dadurch ist das fünfte Schaltelement im ersten bis sechsten Vorwärtsgang und im ersten Rückwärtsgang geschlossen, und muss nur beim Schaltvorgang in den siebenten Vorwärtsgang geschlossen werden. Gemäß einer alternativen Ausführung können das dritte und/oder das fünfte Schaltelement auch als kraftschlüssiges Schaltelement ausgebildet sein, beispielsweise als Stahl-Stahl-Element, bei dem die einander zugeordneten Reibflächen einen hohen Reibungskoeffizienten aufweisen. Das dritte und/oder fünfte Schaltelement kann auch als Bandbremse ausgebildet sein.

Gemäß einer ersten Ausführungsform sind äußere Schnittstellen der Antriebswelle und der Abtriebswelle koaxial zueinander und an gegenüberliegenden axialen Enden des Getriebes angeordnet. Von den drei Planetenradsätzen weist dabei der dritte Planetenradsatz den größten axialen Abstand zur äußeren Schnittstelle der Antriebswelle auf. Eine solche Anordnung eignet sich besonders zur Anwendung des Getriebes in einem Kraftfahrzeug mit parallel zur Fahrtrichtung des Kraftfahrzeugs ausgerichtetem Antriebsstrang.

Gemäß einer zweiten Ausführungsform sind äußere Schnittstellen der Antriebswelle und Abtriebswelle koaxial zueinander angeordnet. Von den drei Planetenradsätzen weist dabei der dritte Planetenradsatz den kürzesten axialen Abstand zur äußeren Schnittstelle der Antriebswelle auf. Die äußere Schnittstelle der Abtriebswelle weist eine Verzahnung auf, welche mit einer Verzahnung einer zur Hauptachse des Getriebes achsparallel angeordneten Welle kämmt. Auf dieser Welle kann beispielsweise das Achsdifferential eines Antriebsstrangs angeordnet sein. Eine solche Anordnung eignet sich besonders zur Anwendung des Getriebes in einem Kraftfahrzeug mit quer zur Fahrtrichtung des Kraftfahrzeugs ausgerichtetem Antriebsstrang.

Vorzugsweise umfasst das Getriebe eine elektrische Maschine mit einem drehfesten Stator und einem drehbaren Rotor. Der Rotor ist dabei entweder mit der Antriebswelle oder mit dem dritten Element des zweiten Planetenradsatzes ständig verbunden. Die ständige Verbindung kann dabei als direkte drehfeste Verbindung oder über ein festes Übersetzungsverhältnis ausgebildet sein, beispielsweise über einen zusätzlichen Planetenradsatz, wobei ein Element dieses Planetenradsatzes drehfest festgesetzt ist. Beispielsweise könnte dessen Sonnenrad ständig drehfest festgesetzt, dessen Steg mit der Antriebswelle, bzw. dem dritten Element des zweiten Planetenradsatzes verbunden und dessen Hohlrad mit dem Rotor der elektrischen Maschine verbunden sein, sodass die Drehzahl des Rotors im Vergleich zum Anbindungselement vergrößert wird. Durch die elektrische Maschine kann die Funktionalität des Getriebes erweitert werden, wodurch sich das Getriebe für den Antriebsstrang eines Hybridfahrzeugs eignet. Die Anbindung des Rotors an die Antriebswelle erlaubt die Nutzung sämtlicher Vorwärtsgänge und Rückwärtsgänge bei Antrieb des Hybridfahrzeugs mittels der elektrischen Maschine. Die Anbindung des Rotors an das dritte Element des zweiten Planetenradsatzes erlaubt unter Anderem einen stufenlosen Betrieb des Getriebes.

Das Getriebe kann eine Anschlusswelle aufweisen, welche als Schnittstelle zu einer getriebeexternen Antriebseinheit dient, beispielsweise einer Verbrennungskraftmaschine. Die Anschlusswelle ist über eine Trennkupplung mit der Antriebswelle verbindbar. Alternativ dazu kann die Trennkupplung samt der Anschlusswelle auch außerhalb des Getriebes angeordnet sein. Die Trennkupplung ist, als Bestandteil des Getriebes, vorzugsweise radial innerhalb der elektrischen Maschine, besonders bevorzugt innerhalb des Rotors angeordnet. Dadurch wird eine kompakte Ausbildung des Getriebes begünstigt. Durch die Trennkupplung kann das Kraftfahrzeug mittels der elektrischen Maschine in sämtlichen Vorwärtsgängen des Getriebes angetrieben werden, ohne die getriebeexterne Antriebseinheit mitzuschleppen. Die Trennkupplung kann als formschlüssiges oder als kraftschlüssiges Schaltelement ausgebildet sein.

Ist der Rotor an das dritte Element des zweiten Planetenradsatzes angebunden, so ist die Bildung von vier elektrisch antreibbaren Vorwärtsgängen zwischen dem dritten Element des zweiten Planetenradsatzes und der Abtriebswelle möglich. Dabei sind in jedem der vier elektrisch antreibbaren Vorwärtsgänge zwei der sechs Schaltelemente geschlossen. Der erste elektrisch antreibbare Vorwärtsgang wird durch Schließen des ersten Schaltelements und des dritten Schaltelements gebildet. Der zweite elektrisch antreibbare Vorwärtsgang wird durch Schließen des ersten Schaltelements und des zweiten Schaltelements gebildet. Der dritte elektrisch antreibbare Vorwärtsgang wird durch Schließen des ersten Schaltelements und des sechsten Schaltelements gebildet. Der vierte elektrisch antreibbare Vorwärtsgang wird durch Schließen des zweiten Schaltelements und des sechsten Schaltelements gebildet. Bei einem Schaltvorgang zwischen den ersten drei elektrisch antreibbaren Vorwärtsgängen muss je nur ein Schaltelement geöffnet und ein Schaltelement geschlossen werden, da das erste Schaltelement in den ersten drei elektrisch antreibbaren Vorwärtsgängen geschlossen ist. Dies erleichtert den Schaltvorgang zwischen den ersten drei elektrisch antreibbaren Vorwärtsgängen. In allen vier elektrisch antreibbaren Vorwärtsgängen sind das vierte und fünfte Schaltelement geöffnet, wodurch kein Drehmoment auf die Antriebswelle übertragen wird. Die Trennkupplung zwischen der Antriebswelle und der getriebeexternen Antriebseinheit kann somit entfallen.

Ist der Rotor an das dritte Element des zweiten Planetenradsatzes angebunden, so ist durch Schließen des vierten Schaltelements und entweder des sechsten oder des dritten Schaltelements die Bildung von zumindest einem Überlagerungsbetriebsmodus möglich. Durch Schließen des vierten Schaltelements ist die Antriebswelle mit dem zweiten Element des zweiten Planetenradsatzes verbunden. Steht die Antriebswelle in drehmomentübertragender Verbindung mit einer getriebeexternen Antriebseinheit, so liegt somit am zweiten Element des zweiten Planetenradsatzes eine Drehzahl an. Durch Vorgabe der Drehzahl des Rotors, welcher am dritten Element des zweiten Planetenradsatzes angebunden ist, ist die Drehzahl des ersten Elements des zweiten Planetenradsatzes stufenlos einstellbar. Durch Schließen des sechsten oder des dritten Schaltelements wird die am ersten Element des zweiten Planetenradsatzes anliegende Leistung über den ersten Planetenradsatz an die Abtriebswelle übertragen. Dadurch kann die Abtriebsdrehzahl bei vorgegebener Drehzahl der Antriebswelle und Vorgabe der Rotordrehzahl stufenlos verändert werden, wodurch beispielsweise ein Anfahrvorgang eines Kraftfahrzeugs mit einem solchen Getriebe darstellbar ist. Dadurch wird die Funktionalität des Getriebes weiter verbessert.

Dem Getriebe kann in bekannter Weise ein Anfahrelement vorangeschaltet werden, beispielsweise ein hydrodynamischer Drehmomentwandler oder eine Reibkupplung.

Ein solches Anfahrelement kann auch integraler Bestandteil des Getriebes sein. Das Anfahrelement ermöglicht bei Verwendung des Getriebes im Kraftfahrzeug-Antriebsstrang einen Anfahrvorgang, indem es einen Schlupf zwischen Verbrennungsmotor und Abtriebswelle ermöglicht. Besonders bevorzugt bildet das als Reibschaltelement ausgebildete fünfte Schaltelement das Anfahrelement. Durch Schlupfbetrieb des fünften Schaltelements ist ein Anfahrvorgang in allen niedrigen Vorwärtsgängen und im ersten Rückwärtsgang möglich. Ist das fünfte Schaltelement als formschlüssiges Schaltelement ausgebildet, so dient bevorzugt das erste Schaltelement als Anfahrelement zum Vorwärtsanfahren, und das fünfte Schaltelement als Anfahrelement zum Rückwärtsanfahren. Das erste und fünfte Schaltelement sind entsprechend als Reibschaltelement auszuführen.

Das Getriebe kann Bestandteil eines Antriebsstrangs eines Kraftfahrzeugs sein. Der Antriebsstrang weist neben dem Getriebe auch eine Verbrennungskraftmaschine auf, welche über einen Torsionsschwingungsdämpfer mit der Antriebswelle des Getriebes drehelastisch verbunden ist. Zwischen Antriebswelle und Verbrennungskraftmaschine kann sich die Trennkupplung befinden, welche Bestandteil des Getriebes sein kann. Die Abtriebswelle des Getriebes ist mit einem Achsgetriebe antriebswirkverbunden, welche mit Rädern des Kraftfahrzeugs verbunden ist. Weist das Getriebe die elektrische Maschine auf, so ermöglicht der Antriebsstrang mehrere Antriebsmodi des Kraftfahrzeugs. In einem elektrischen Fahrbetrieb wird das Kraftfahrzeug von der elektrischen Maschine des Getriebes angetrieben. In einem verbrennungsmotorischen Betrieb wird das Kraftfahrzeug von der Verbrennungskraftmaschine angetrieben. In einem hybridischen Betrieb wird das Kraftfahrzeug sowohl von der Verbrennungskraftmaschine als auch von der elektrischen Maschine des Getriebes angetrieben.

Eine ständige Verbindung wird als Verbindung zwischen zwei Elementen bezeichnet, die stets besteht. Derart ständig verbundene Elemente drehen stets mit der gleichen Abhängigkeit zwischen deren Drehzahlen. In einer ständigen Verbindung zwischen zwei Elementen kann sich kein Schaltelement befinden. Eine ständige Verbindung ist daher von einer schaltbaren Verbindung zu unterscheiden. Eine ständig drehfeste Verbindung wird als Verbindung zwischen zwei Elementen bezeichnet, die stets besteht und deren verbundene Elemente somit stets die gleiche Drehzahl aufweisen.

Unter dem Begriff "Schließen eines Schaltelements" wird im Zusammenhang mit der Gangbildung ein Vorgang verstanden, bei dem das Schaltelement so angesteuert wird, dass es am Ende des Schließvorgangs ein hohes Maß an Drehmoment überträgt. Während formschlüssige Schaltelemente im "geschlossenen" Zustand keine Differenzdrehzahl zulassen, ist bei kraftschlüssigen Schaltelementen im "geschlossenen" Zustand die Ausbildung einer geringen Differenzdrehzahl zwischen den Schaltelementhälften gewollt oder ungewollt möglich.

Ausführungsbeispiele der Erfindung sind nachfolgend anhand der beigefügten Figuren detailliert beschrieben. Gleiche und vergleichbare Bauteile sind dabei mit gleichen Bezugszeichen versehen. Es zeigen:
Fig. 1 bis Fig. 8 schematische Darstellungen von Getrieben gemäß ersten bis achten Ausführungsbeispielen der Erfindung;
Fig. 9 ein Schaltschema für die Getriebe gemäß dem ersten bis achten Ausführungsbeispiel;
Fig. 10 bis Fig. 13 schematische Darstellungen von Getrieben mit elektrischer Maschine gemäß neunten bis zwölften Ausführungsbeispielen der Erfindung;
Fig. 14 ein zusätzliches Schaltschema für die Getriebe gemäß dem elften und zwölften Ausführungsbeispiel; und
Fig. 15 eine schematische Darstellung einen Antriebsstrangs eines Kraftfahrzeugs.

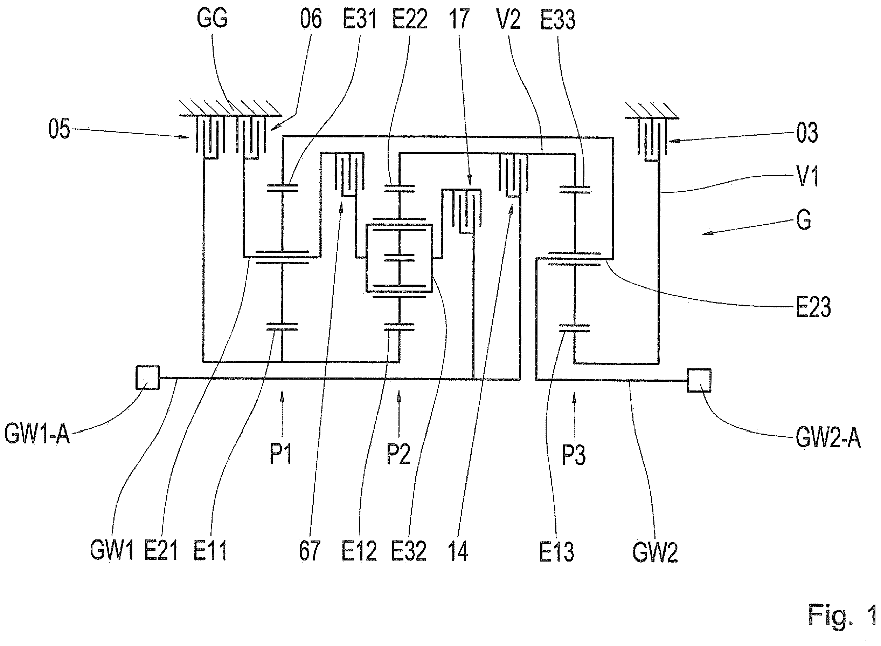

Fig. 1 zeigt schematisch ein Getriebe G entsprechend eines ersten Ausführungsbeispiels der Erfindung. Das Getriebe G weist einen ersten Planetenradsatz P1, einen zweiten Planetenradsatz P2 und einen dritten Planetenradsatz P3 auf. Jeder der drei Planetenradsätze P1, P2, P3 weist ein erstes Element E11, E12, E13, ein zweites Element E21, E22, E23 und ein drittes Element E31, E32, E33 auf. Das erste Element E11, E12, E13 ist stets durch ein Sonnenrad des jeweiligen Planetenradsatzes P1, P2, P3 gebildet. Ist der Planetenradsatz als ein Minus-Radsatz ausgebildet, so ist das zweite Element E21, E22, E23 durch einen Steg des jeweiligen Planetenradsatzes P1, P2, P3 gebildet und das dritte Element E31, E32, E33 durch das Hohlrad des jeweiligen Planetenradsatzes P1, P2, P3. In der in Fig. 1 dargestellten Ausführungsform des Getriebes G sind die Planetenradsätze P1 und P3 jeweils als ein Minus-Radsatz ausgebildet, und der zweite Planetenradsatz P2 als ein Plus-Radsatz.

Das Getriebe G weist eine Antriebswelle GW1 und eine Abtriebswelle GW2 auf. Die Abtriebswelle GW2 ist mit dem dritten Element E31 des ersten Planetenradsatzes P1 und mit dem zweiten Element E23 des dritten Planetenradsatzes P3 ständig verbunden. Das erste Element E11 des ersten Planetenradsatzes P1 ist mit dem ersten Element E12 des zweiten Planetenradsatzes P2 ständig verbunden. Das zweite Element E22 des zweiten Planetenradsatzes P2 ist mit dem dritten Element E33 des dritten Planetenradsatzes P3 ständig verbunden. Das Getriebe G weist ferner ein erstes Schaltelement 03, ein zweites Schaltelement 05, ein drittes Schaltelement 06, ein viertes Schaltelement 14, ein fünftes Schaltelement 17 und ein sechstes Schaltelement 67 auf. Durch Schließen des ersten Schaltelements 03 wird das erste Element E13 des dritten Planetenradsatzes P3 drehfest festgesetzt, indem es über das erste Schaltelement 03 mit einem drehfesten Bauelement GG des Getriebes G verbunden wird. Das drehfeste Bauelement GG kann beispielsweise durch das Getriebegehäuse des Getriebes G gebildet sein. Durch Schließen des zweiten Schaltelements 05 wird das erste Element E11 des ersten Planetenradsatzes P1 und damit auch das damit verbundene erste Element E12 des zweiten Planetenradsatzes P2 drehfest festgesetzt. Durch Schließen des dritten Schaltelements 06 wird das zweite Element E21 des ersten Planetenradsatzes P1 drehfest festgesetzt. Durch Schließen des vierten Schaltelements 14 wird die Antriebswelle GW1 mit dem zweiten Element E22 des zweiten Planetenradsatzes P2 und damit auch mit dem damit verbundenen dritten Element E33 des dritten Planetenradsatzes P3 verbunden. Durch Schließen des fünften Schaltelements 17 wird die Antriebswelle GW1 mit dem dritten Element E32 des zweiten Planetenradsatzes P2 verbunden. Durch Schließen des sechsten Schaltelements 67 wird das zweite Element E21 des ersten Planetenradsatzes P1 mit dem dritten Element E32 des zweiten Planetenradsatzes P2 verbunden.

Das Getriebe G weist zahlreiche Koppelungen auf, darunter eine erste Koppelung V1 und eine zweite Koppelung V2. Die erste Koppelung V1 besteht zwischen dem ersten Element E13 des dritten Planetenradsatzes P3 und dem drehfesten Bauelement GG. Die zweite Koppelung V2 besteht zwischen dem zweiten Element E22 des zweiten Planetenradsatzes P2 und dem dritten Element E33 des dritten Planetenradsatzes P3. Eine der beiden Koppelungen, im Getriebe G gemäß dem ersten Ausführungsbeispiel die erste Koppelung V1, ist stets als eine mittels dem ersten Schaltelement 03 schaltbare Verbindung ausgebildet. Die verbleibende der beiden Koppelungen V1, V2, im Getriebe G gemäß dem ersten Ausführungsbeispiel die zweite Koppelung V2, ist stets als eine ständige Verbindung ausgebildet.

Die drei Planetenradsätze P1, P2, P3 sind in folgender axialen Reihenfolge angeordnet: Erster Planetenradsatz P1, zweiter Planetenradsatz P2, dritter Planetenradsatz P3. Die Antriebswelle GW1 weist eine äußere Schnittstelle GW1-A auf, über welche die Antriebswelle GW1 mit einer getriebeexternen Antriebseinheit verbunden ist oder verbunden werden kann. In dieser Verbindung kann sich ein Anfahrelement befinden, beispielsweise ein hydrodynamischer Drehmomentwandler oder eine Reibkupplung. Ein solches Anfahrelement kann auch Bestandteil des Getriebes G sein. Die Abtriebswelle GW2 weist ebenso eine äußere Schnittstelle GW2-A auf. Über diese äußere Schnittstelle GW2-A kann die Abtriebswelle GW2 mit einem nicht dargestellten Achsgetriebe AG verbunden werden, welches Teil des Getriebes G sein kann oder auch getriebeextern angeordnet sein kann. Die äußeren Schnittstellen GW1-A und GW2-A der Antriebswelle GW1 und der Abtriebswelle GW2 sind koaxial zueinander und an gegenüberliegenden axialen Enden des Getriebes G angeordnet. Der erste Planetenradsatz P1 liegt der äußeren Schnittstelle GW1-A der Antriebswelle GW1 axial am nächsten. Der dritte Planetenradsatz P3 liegt der äußeren Schnittstelle GW2-A der Abtriebswelle GW2 axial am nächsten.

Das Getriebe G gemäß dem ersten Ausführungsbeispiel weist drei als Bremsen ausgebildete Schaltelemente 03, 05, 06 sowie drei als Kupplungen ausgebildete Schaltelemente 14, 17, 67 auf. Diese hohe Anzahl an als Bremsen ausgebildete Schaltelemente vereinfacht den Aufbau des Getriebes G, da Bremsen aufgrund ihrer gehäusenahen Anordnung einfach zu betätigen sind. Im Getriebe G gemäß dem ersten Ausführungsbeispiel sind die drei als Bremsen ausgebildeten Schaltelemente 03, 05, 06 axial außerhalb der drei Planetenradsätze P1, P2, P3 angeordnet. Eine solche Anordnung begünstigt einen radial kompakten Aufbau des Getriebes G. Die drei als Bremsen ausgebildeten Schaltelemente 03, 05, 06 können alternativ dazu auch radial außerhalb der drei Planetenradsätze P1, P2, P3 angeordnet werden. Durch eine solche Anordnung wird ein axial besonders kompaktes Getriebe G erzielt.

Die Schaltelemente 03, 05, 06, 14, 17, 67 sind schematisch als kraftschlüssige Reibschaltelemente dargestellt. Dies ist lediglich beispielhaft anzusehen. Jedes dieser Schaltelemente oder auch nur eine Auswahl davon kann auch als formschlüssiges Schaltelement ausgebildet sein. Dies gilt für sämtliche Ausführungsformen. Für das Getriebe G gemäß dem in Fig. 1 dargestellten ersten Ausführungsbeispiel ist anzunehmen, dass sämtliche Schaltelemente als kraftschlüssige Reibschaltelemente ausgebildet sind. Dabei sind das vierte Schaltelement 14 und das fünfte Schaltelement 17 axial zwischen dem zweiten Planetenradsatz P2 und dem dritten Planetenradsatz P3 angeordnet. Dies vereinfacht den Lageraufbau des Getriebes G, da radial innerhalb der miteinander verbundenen Sonnräder des ersten und zweiten Planetenradsatzes P1, P2 nur eine einzige Welle drehbar zu lagern ist, konkret die Antriebswelle GW1. Alternativ dazu kann das vierte Schaltelement 14 und/oder das fünfte Schaltelement 17 axial außerhalb der drei Planetenradsätze P1, P2, P3 angeordnet werden, beispielsweise axial neben dem zweiten Schaltelement 05. Mit einer solchen Anordnung ergibt sich eine bessere Zugänglichkeit zu dem vierten und/oder fünften Schaltelement 14, 17. Das sechste Schaltelement 67 ist axial zwischen dem ersten Planetenradsatz P1 und dem zweiten Planetenradsatz P2 angeordnet.

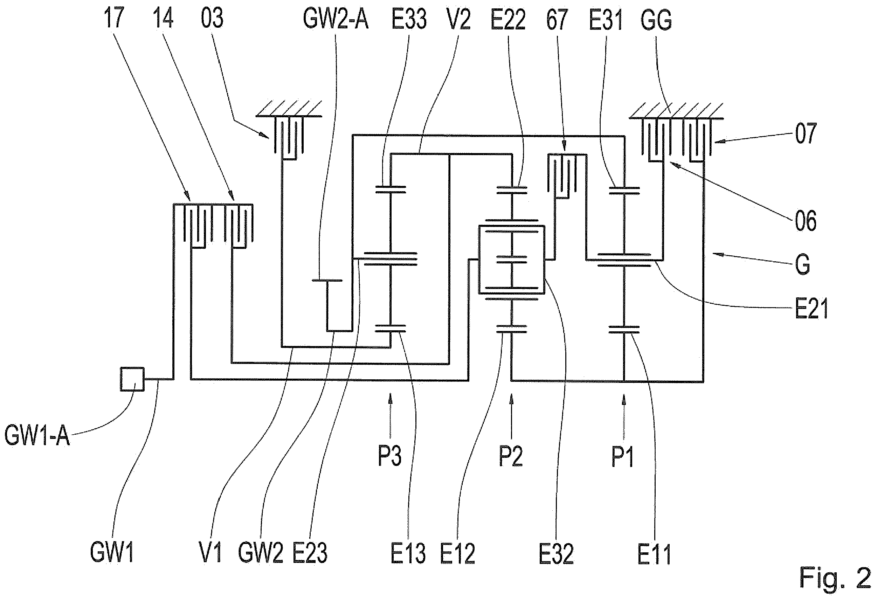

Fig. 2 zeigt schematisch ein Getriebe G gemäß einem zweiten Ausführungsbeispiel der Erfindung, welches in seiner Kinematik dem in Fig. 1 dargestellten ersten Ausführungsbeispiel vollkommen entspricht. Lediglich die Anordnung der einzelnen Getriebekomponenten wurde verändert. Von den drei Planetenradsätzen P1, P2, P3 weist nun der dritte Planetenradsatz P3 den kürzesten axialen Abstand zur äußeren Schnittstelle GW1-A der Antriebswelle GW1 auf. Die äußere Schnittstelle GW2-A der Abtriebswelle GW1 befindet sich nun nicht mehr an einem axialen Ende des Getriebes G sondern axial zwischen dem dritten Planetenradsatz P3 und dem ersten Schaltelement 03. Die äußere Schnittstelle GW2-A der Abtriebswelle GW2 ist als eine Verzahnung ausgebildet. Diese Verzahnung kämmt mit einer Verzahnung, welche auf einer nicht dargestellten, zur Hauptachse des Getriebes G achsparallel angeordneten Welle, kämmt. Das Getriebe G gemäß dem in Fig. 2 dargestellten zweiten Ausführungsbeispiel ist somit für die Anwendung in einem Kraftfahrzeugantriebsstrang ausgebildet, welcher quer zur Fahrtrichtung des Kraftfahrzeuges ausgerichtet ist. Das vierte Schaltelement 14 und das fünfte Schaltelement 17 sind nun nicht mehr axial zwischen den drei Planetenradsätzen P1, P2, P3 angeordnet. Stattdessen sind das vierte Schaltelement 14 und das fünfte Schaltelement 17 axial zwischen der äußeren Schnittstelle GW1-A der Antriebswelle GW1 und dem ersten Schaltelement 03 angeordnet. Das vierte Schaltelement 14 und das fünfte Schaltelement 17 sind beispielhaft axial unmittelbar nebeneinander angeordnet. Alternativ dazu können das vierte Schaltelement 14 und das fünfte Schaltelement 17 radial ineinander geschachtelt sein. Durch eine solche Anordnung wird ein axial kompakter Aufbau des Getriebes G begünstigt. Das vierte Schaltelement 14 kann zumindest abschnittsweise auch radial innerhalb des ersten Schaltelements 03 angeordnet sein. Dadurch wird ein besonders kompakter Aufbau des Getriebes G erzielt. Das zweite Schaltelement 06 und das dritte Schaltelement 07 sind an jenem axialen Ende des Getriebes G angeordnet, welches der äußeren Schnittstelle GW1-A der Antriebswelle GW1 gegenüberliegt. Beispielhaft sind das zweite und dritte Schaltelement 06, 07 axial außerhalb der Planetenradsätze P1, P2, P3 angeordnet. Alternativ dazu können das zweite und/oder das dritte Schaltelement radial außerhalb des ersten Planetenradsatzes P1 angeordnet sein. Eine solche Anordnung begünstigt einen axial kompakten Aufbau des Getriebes G. Besonders für die Anwendung des Getriebes G in einem quer zur Fahrtrichtung eines Kraftfahrzeuges ausgerichteten Antriebsstrang ist ein solcher axial kompakter Aufbau von großem Nutzen. Das dritte Schaltelement 07 kann auch radial innerhalb des zweiten Schaltelementes 06 angeordnet sein oder, wie in Fig. 2 dargestellt, unmittelbar axial nebeneinander.

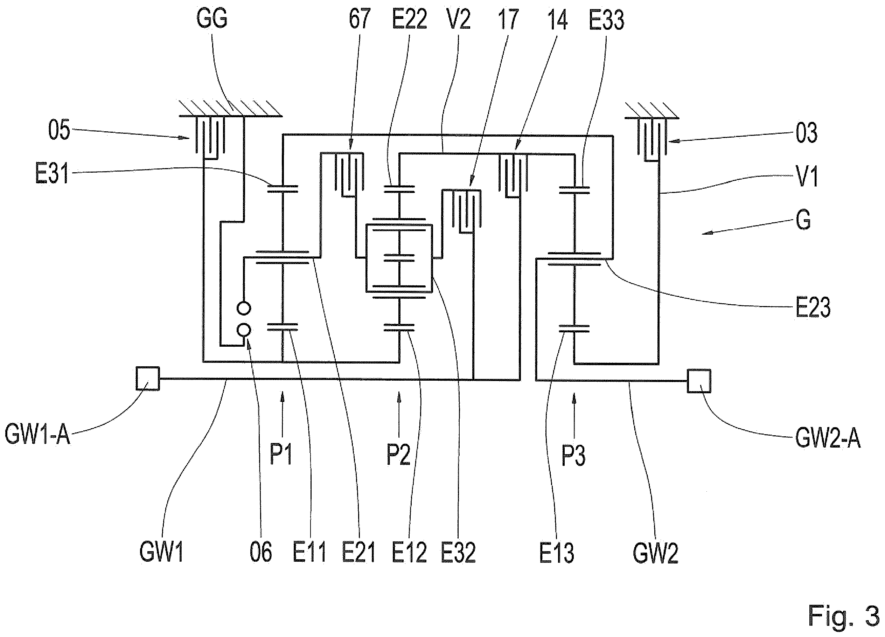

Fig. 3 zeigt schematisch ein Getriebe G gemäß einem dritten Ausführungsbeispiel der Erfindung, welches in Kinematik und Aufbau dem in Fig. 1 dargestellten ersten Ausführungsbeispiel entspricht. Lediglich die Bauart des dritten Schaltelements 06 wurde verändert, so dass das dritte Schaltelement 06 nun als formschlüssiges Schaltelement ausgebildet ist. Der Wirkdurchmesser des solcherart ausgebildeten dritten Schaltelementes 06 ist bewusst sehr klein gehalten, um den Bauaufwand der schaltbaren formschlüssigen Verbindung zu reduzieren. Das formschlüssige Schaltelement 06 ist ausgehend vom Gehäuse des Getriebes G gut zugänglich, und somit auf einfache Weise zu betätigen.

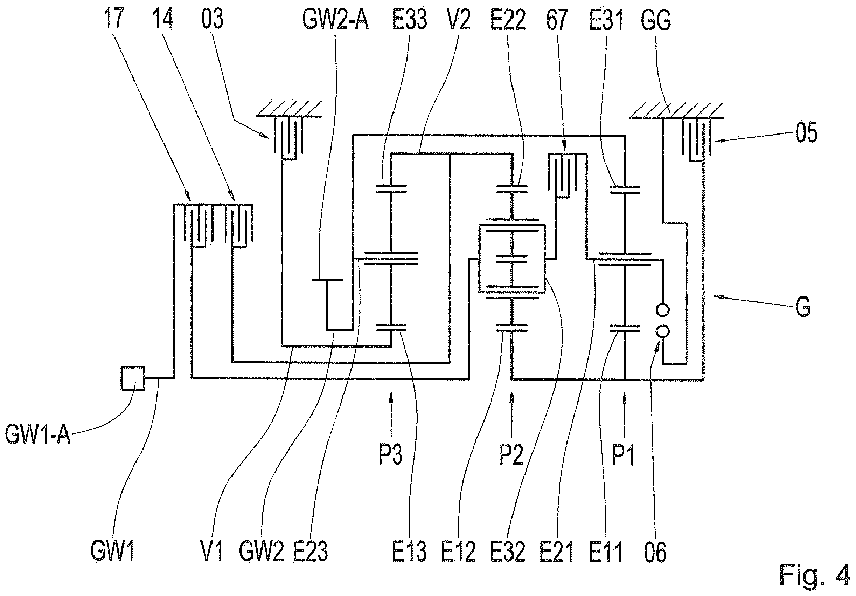

Fig. 4 zeigt schematisch ein Getriebe G gemäß einem vierten Ausführungsbeispiel der Erfindung, welches in Kinematik und Aufbau dem in Fig. 2 dargestellten zweiten Ausführungsbeispiel entspricht. Lediglich die Bauart des dritten Schaltelements 06 wurde verändert, so dass das dritte Schaltelement 06 nun als formschlüssiges Schaltelement ausgebildet ist. Dieses ist wiederum an einem möglichst kleinen Wirkdurchmesser angeordnet.

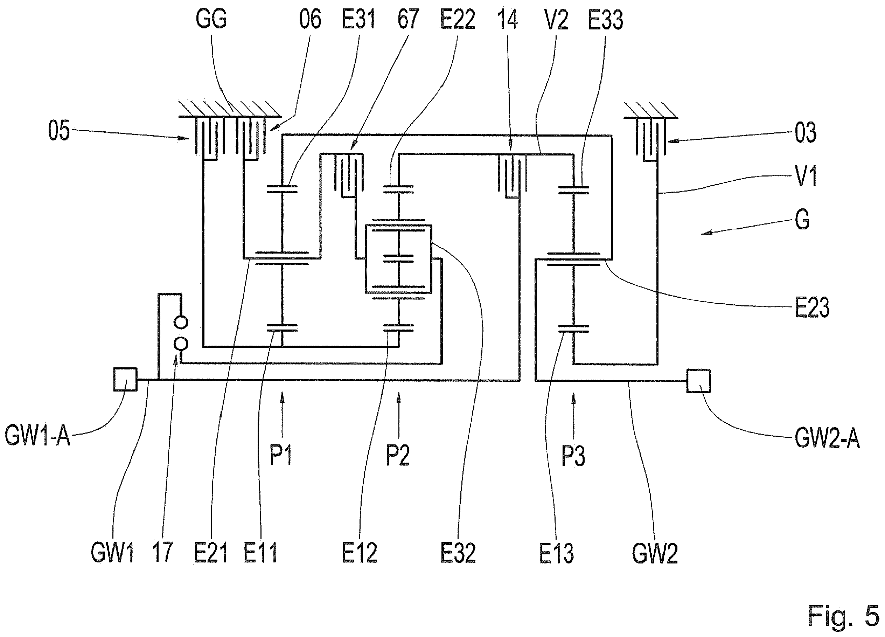

Fig. 5 zeigt schematisch ein Getriebe G gemäß einem fünften Ausführungsbeispiel der Erfindung, welches in Kinematik und Aufbau dem in Fig. 1 dargestellten ersten Ausführungsbeispiel entspricht. Lediglich die Bauform des fünften Schaltelements 17 wurde verändert, so dass das fünfte Schaltelement 17 nun als formschlüssiges Schaltelement ausgebildet ist. Um die Betätigung des solcherart ausgebildeten fünften Schaltelements 17 zu vereinfachen, ist das fünfte Schaltelement 17 nun axial außerhalb der drei Planetenradsätze P1, P2, P3 angeordnet. Dadurch ergibt sich eine gute Zugänglichkeit ausgehend vom Getriebegehäuse des Getriebes G. Dementsprechend sind radial innerhalb der miteinander verbundenen Sonnenräder des ersten und zweiten Planetenradsatzes P1, P2 nun zwei Wellen drehbar ineinander gelagert, nämlich die Verbindung zwischen dem fünften Schaltelement 17 und dem Steg des zweiten Planetenradsatzes P2 sowie die Antriebswelle GW1, welche zum vierten Schaltelement 14 führt. Das fünfte Schaltelement 17 ist an einem möglichst kleinen Wirkdurchmesser angeordnet, um den Bauaufwand der formschlüssigen Verbindung gering zu halten.

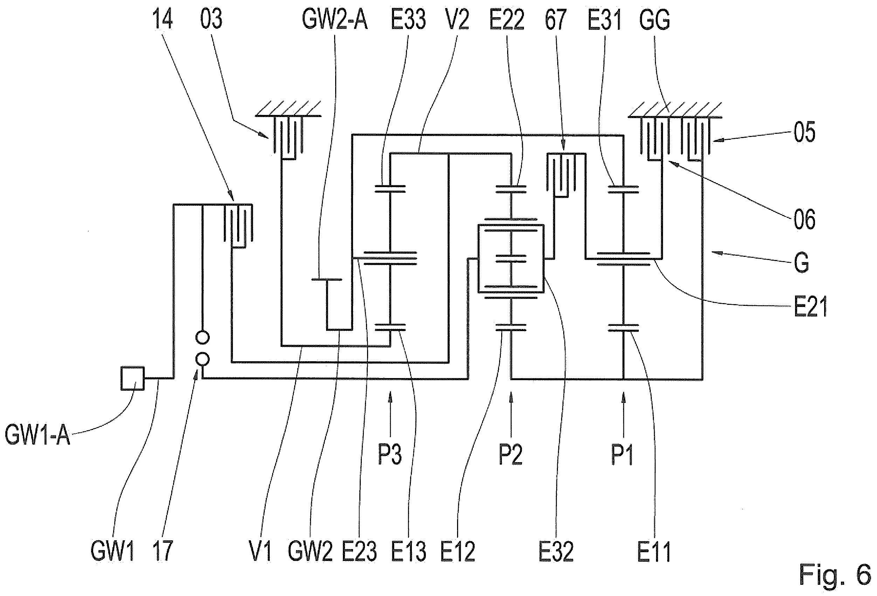

Fig. 6 zeigt schematisch ein Getriebe G gemäß einem sechsten Ausführungsbeispiel der Erfindung, welches in Kinematik und Aufbau dem in Fig. 2 dargestellten zweiten Ausführungsbeispiel entspricht. Lediglich die Bauform des fünften Schaltelements 17 wurde verändert, so dass das fünfte Schaltelement 17 nun als ein formschlüssiges Schaltelement ausgebildet ist. Das solcherart ausgebildete fünfte Schaltelement 17 ist auf möglichst kleinem Wirkdurchmesser angeordnet, um den Bauaufwand der formschlüssigen Verbindung möglichst gering zu halten.

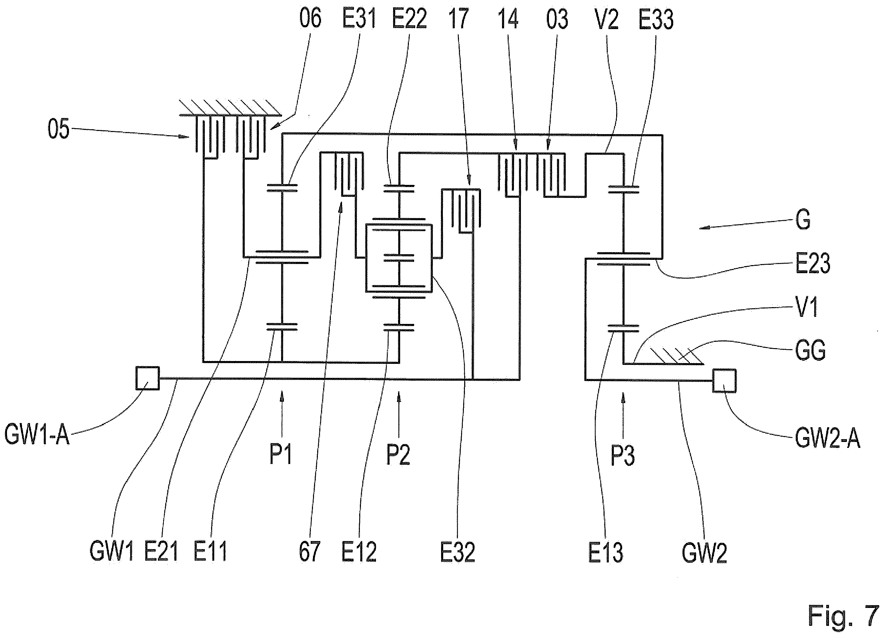

Fig. 7 zeigt schematisch ein Getriebe G gemäß einem siebten Ausführungsbeispiel der Erfindung, welches im Wesentlichen dem in Fig. 1 dargestellten ersten Ausführungsbeispiel entspricht. Lediglich die Lage und Anordnung des ersten Schaltelements 03 wurde verändert, so dass sich das erste Schaltelement 03 in der zweiten Koppelung V2 befindet. Durch Schließen des ersten Schaltelementes 03 wird demnach das zweite Element E22 des zweiten Planetenradsatzes P2 mit dem dritten Element E33 des dritten Planetenradsatzes P3 verbunden. Da die zweite Koppelung V2 nun als eine schaltbare Verbindung ausgebildet ist, ist die erste Koppelung V1 dementsprechend als eine ständige Verbindung ausgebildet. Daher ist das erste Element E13 des dritten Planetenradsatzes P3 nun ständig mit dem drehfesten Bauelement GG verbunden. Eine solche Variation der Anordnung des ersten Schaltelements 03 ist für sämtliche Ausführungsbeispiele möglich. Das erste Schaltelement 03 ist nun axial zwischen dem zweiten Planetenradsatz P2 und dem dritten Planetenradsatz P3 angeordnet. Die in Fig. 7 dargestellte Anordnung der drei Schaltelemente 03, 14, 17 ist lediglich beispielhaft anzusehen. Der Fachmann würde bei Bedarf auch eine geschachtelte Anordnung der drei Schaltelemente 03, 14, 17 wählen, um einen kompakten Aufbau des Getriebes G zu erzielen. Das vierte Schaltelement 14 und/oder das fünfte Schaltelement 17 können bei Bedarf auch axial außerhalb der drei Planetenradsätze P1, P2, P3 angeordnet werden.

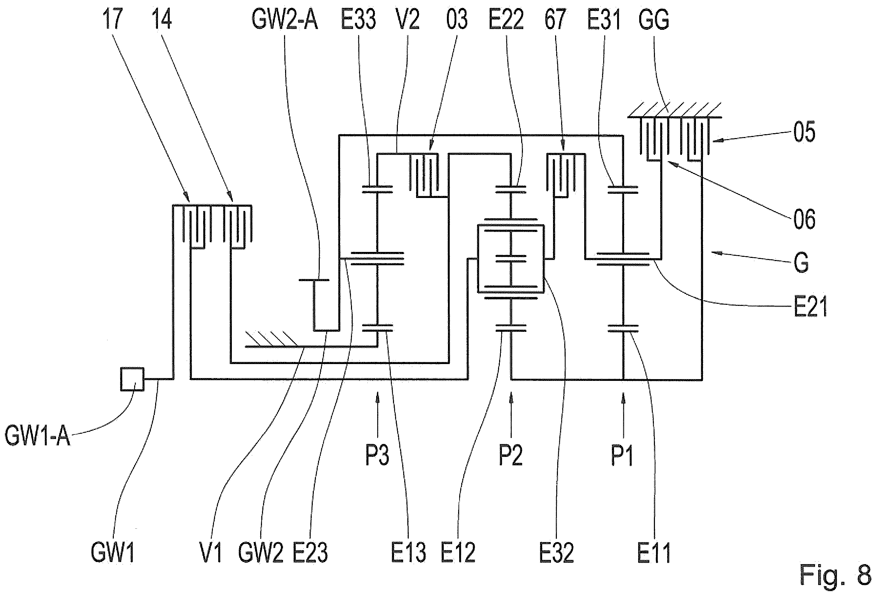

Fig. 8 zeigt schematisch ein Getriebe G gemäß einem achten Ausführungsbeispiel der Erfindung, welches im Wesentlichen dem in Fig. 2 dargestellten zweiten Ausführungsbeispiel entspricht. Analog zu dem in Fig. 7 dargestellten siebten Ausführungsbeispiel ist nun die zweite Koppelung V2 als eine schaltbare Verbindung ausgebildet, während die erste Koppelung V1 als eine ständige Verbindung ausgebildet ist. Dementsprechend wird durch Schließen des ersten Schaltelementes 03 nun das dritte Element E33 des dritten Planetenradsatzes P3 mit dem zweiten Element E22 des zweiten Planetenradsatzes P2 verbunden. Das erste Element E13 des dritten Planetenradsatzes P3 ist mit dem drehfesten Bauelement GG verbunden und somit drehfest festgesetzt.

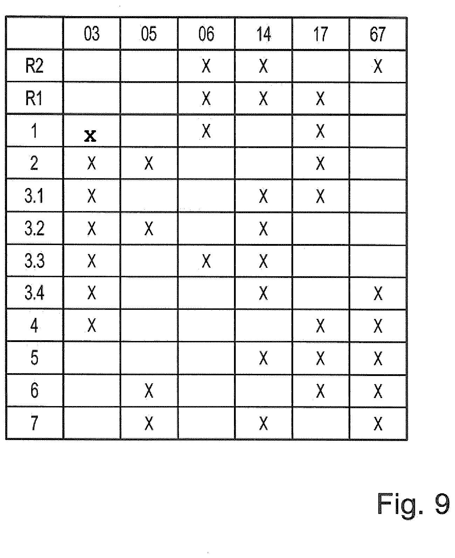

Fig. 9 zeigt ein Schaltschema, welches für die Getriebe G gemäß dem ersten bis achten Ausführungsbeispiel anwendbar ist. In den Zeilen des Schaltschemas sind ein erster Rückwärtsgang R1, ein zweiter Rückwärtsgang R2 sowie ein erster bis siebter Vorwärtsgang 1 bis 7 angegeben. In den Spalten des Schaltschemas ist durch ein X gekennzeichnet, welche der Schaltelemente 03, 05, 06, 14, 17, 67 in welchem Gang R1, R2, 1 bis 7 geschlossen sind. Die Gänge beziehen sich auf feste Übersetzungsverhältnisse zwischen der Antriebswelle GW1 und der Abtriebswelle GW2. Zur Bildung des dritten Vorwärtsganges stehen vier verschiedene Varianten zur Verfügung, welche als 3.1, 3.2, 3.3, 3.4 angegeben sind. In jedem dieser vier Varianten sind das erste Schaltelement 03 und das vierte Schaltelement 14 geschlossen. Durch das Schließen dieser beiden Schaltelemente 03, 14 ist das Drehzahlverhältnis zwischen Antriebswelle GW1 und Abtriebswelle GW2 bereits festgelegt. Durch das Schließen eines weiteren Schaltelements, nämlich entweder dem fünften Schaltelement 17 oder dem zweiten Schaltelement 05 oder dem dritten Schaltelement 06 oder dem sechsten Schaltelement 67 werden die Drehzahlverhältnisse der Elemente der drei Planetenradsätze P1, P2, P3 zueinander festgelegt. Bevorzugt wird zur Bildung des dritten Vorwärtsganges die Variante 3.1 gewählt, da in der Variante 3.1 das fünfte Schaltelement 17 geschlossen ist. Somit kann das fünfte Schaltelement in sämtlichen Vorwärtsgängen 1 bis 6 geschlossen bleiben. Bei einem Schaltvorgang vom ersten Vorwärtsgang 1 in den ersten Rückwärtsgang R1 bleiben das dritte und das fünfte Schaltelement 06, 17 geschlossen. Daher ist der erste Rückwärtsgang R1 aufgrund der vereinfachten Schaltung ausgehend vom ersten Vorwärtsgang 1 zu bevorzugen. Der zweite Rückwärtsgang R2 ist lediglich als Option anzusehen.

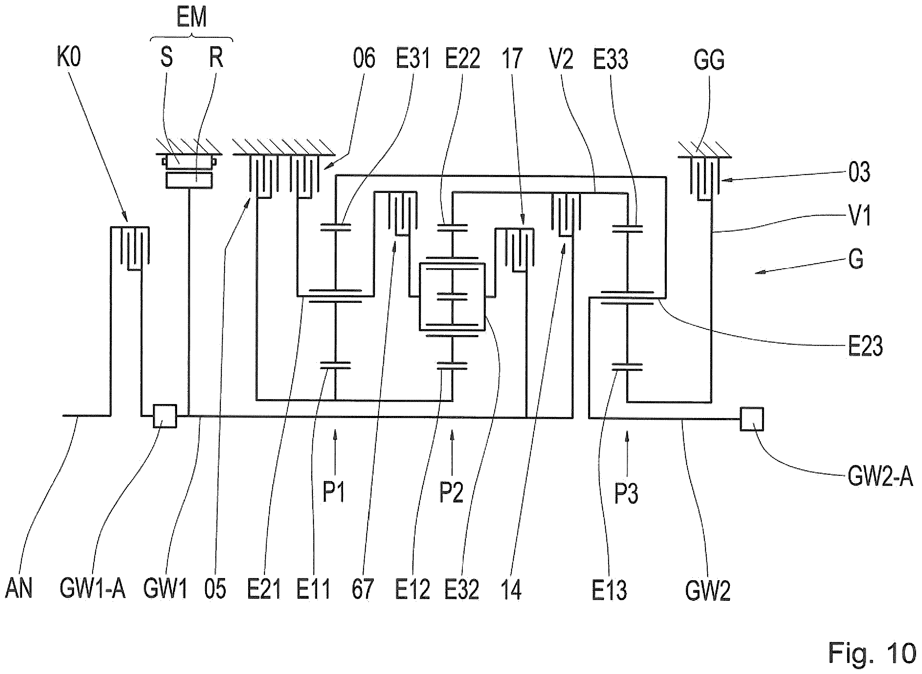

Fig. 10 zeigt schematisch ein Getriebe G gemäß einem neunten Ausführungsbeispiel der Erfindung, welches in Aufbau und Kinematik dem in Fig. 1 dargestellten ersten Ausführungsbeispiel entspricht. Das Getriebe G wurde um eine elektrische Maschine EM erweitert, welche einen drehfesten Stator S und einen drehbaren Rotor R umfasst. Der drehbare Rotor R ist mit der Antriebswelle GW1 ständig verbunden. Diese ständige Verbindung könnte, wie in Fig. 10 dargestellt, als eine direkte Verbindung ausgebildet sein oder auch als eine Verbindung über ein Übersetzungsgetriebe. Beispielsweise könnte ein zusätzlicher Planetenradsatz vorgesehen sein, dessen Sonnenrad ständig drehfest festgesetzt ist, dessen Steg mit der Antriebswelle GW1 verbunden ist und dessen Hohlrad mit dem Rotor R der elektrischen Maschine EM verbunden ist. Das Getriebe G gemäß Fig. 10 umfasst auch eine Anschlusswelle AN, welche über eine Trennkupplung K0 mit der Antriebswelle GW1 verbindbar ist. Die elektrische Maschine EM ist dazu eingerichtet, in jedem Vorwärtsgang 1 bis 7, beziehungsweise Rückwärtsgang R1, R2 Leistung auf die Antriebswelle GW1 abzugeben oder von dieser aufzunehmen. Durch Öffnen der Trennkupplung K0 kann eine mit der Anschlusswelle AN verbundene getriebeexterne Antriebseinheit abgekoppelt werden, so dass ein mit dem Getriebe G ausgestattetes Kraftfahrzeug durch die elektrische Maschine EM antreibbar ist ohne die getriebeexterne Antriebseinheit mitzuschleppen. Die Trennkupplung K0 kann als formschlüssiges oder als kraftschlüssiges Schaltelement ausgebildet sein und kann zumindest abschnittsweise radial innerhalb des Rotors R angeordnet sein.

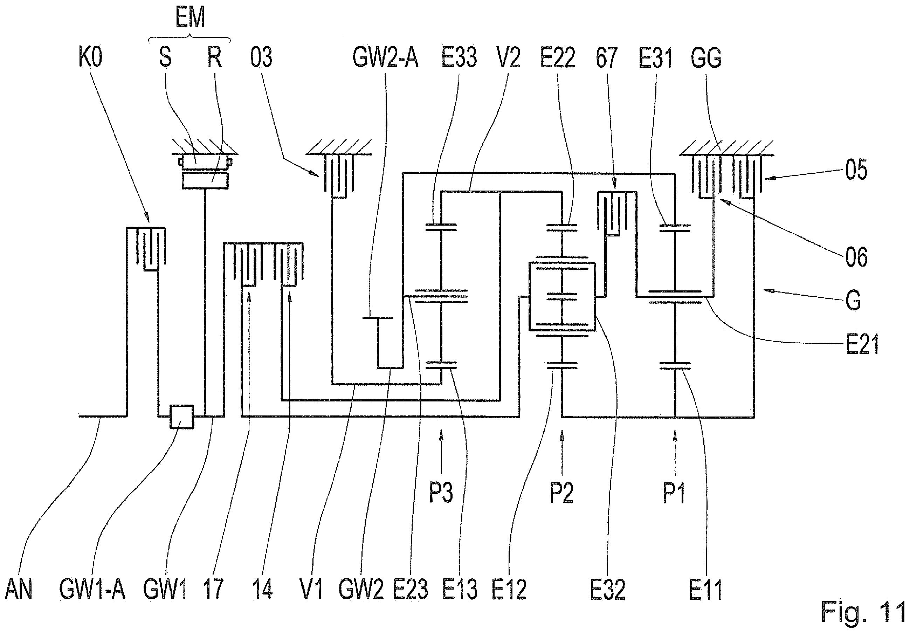

Fig. 11 zeigt schematisch ein Getriebe G gemäß einem zehnten Ausführungsbeispiel der Erfindung, welches in Kinematik und Aufbau dem in Fig. 2 dargestellten zweiten Ausführungsbeispiel entspricht. Wie bei dem Getriebe G gemäß Fig. 10 wurde das Getriebe G gemäß dem zehnten Ausführungsbeispiel durch die elektrische Maschine EM, die Anschlusswelle AN und die Trennkupplung K0 erweitert.

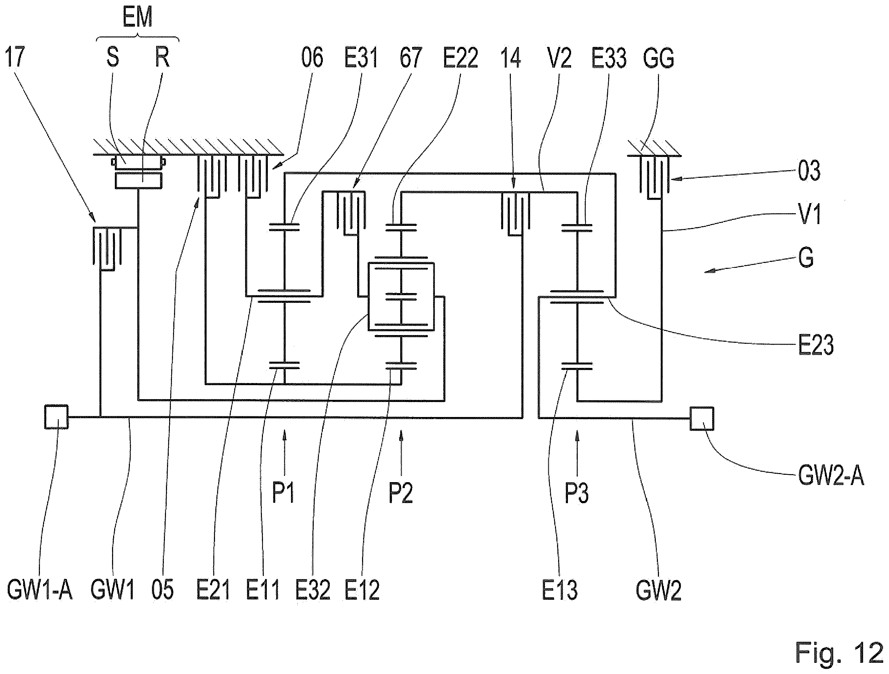

Fig. 12 zeigt schematisch ein Getriebe G gemäß einem elften Ausführungsbeispiel der Erfindung, welches in Kinematik und Aufbau dem in Fig. 1 dargestellten ersten Ausführungsbeispiel entspricht. Der Rotor der elektrischen Maschine EM ist nun an dem dritten Element E32 des zweiten Planetenradsatzes P2 angebunden. Das fünfte Schaltelement 17 befindet sich nun axial außerhalb der drei Planetenradsätze P1, P2, P3 und ist zumindest abschnittsweise radial innerhalb des Rotors R der elektrischen Maschine EM angeordnet. Die elektrische Maschine EM ist axial zwischen der äußeren Schnittstelle GW1-A der Antriebswelle GW1 und dem zweiten Schaltelement 05 angeordnet.

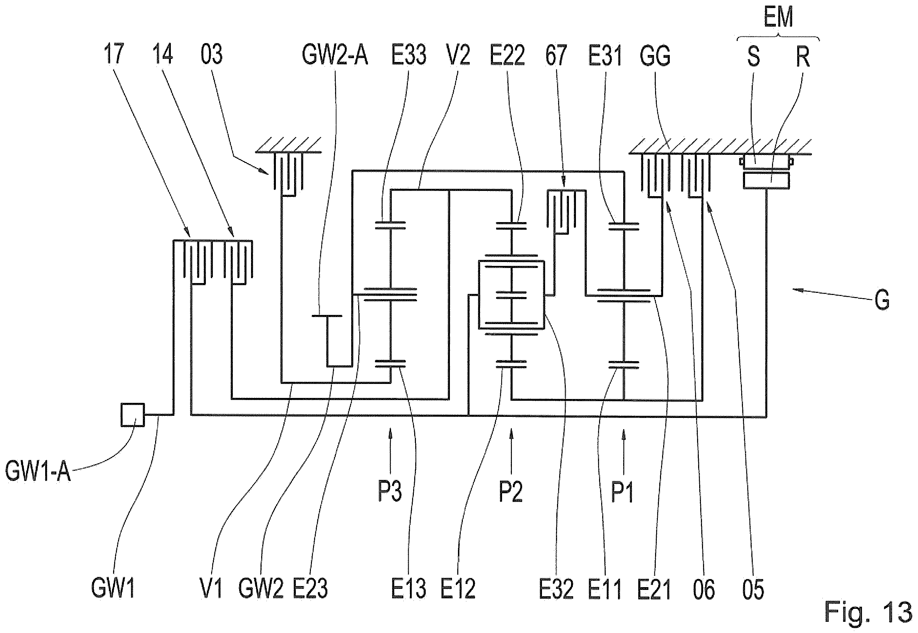

Fig. 13 zeigt schematisch ein Getriebe G gemäß einem zwölften Ausführungsbeispiel der Erfindung, welches in Kinematik und Aufbau im Wesentlichen dem in Fig. 2 dargestellten zweiten Ausführungsbeispiel entspricht. Wie in dem Getriebe G gemäß Fig. 12 wurde das Getriebe G gemäß Fig. 13 durch die elektrische Maschine EM erweitert, deren Rotor R mit dem dritten Element E32 des zweiten Planetenradsatzes P2 verbunden ist. Die elektrische Maschine EM ist dabei an jedem axialen Ende des Getriebes G angeordnet, welches der äußeren Schnittstelle GW1-A der Antriebswelle GW1 gegenüberliegt. Zwischen dem dritten Element E32 des zweiten Planetenradsatzes P2 und dem Rotor R kann auch ein Übersetzungsgetriebe mit festem Übersetzungsverhältnis angeordnet sein, so dass die Drehzahl des Rotors R bevorzugt höher ist als die Drehzahl des dritten Elements E32 des zweiten Planetenradsatzes P2. Dies gilt auch für das Getriebe G gemäß dem in Fig. 12 dargestellten elften Ausführungsbeispiel.

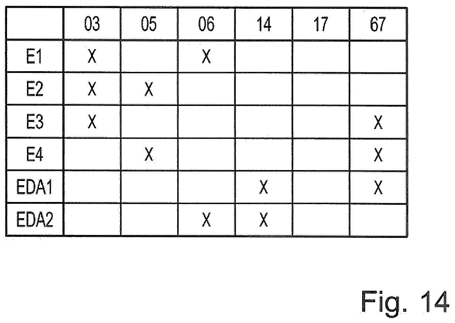

Das in Fig. 9 dargestellte Schaltschema ist auch für die Getriebe G gemäß dem neunten bis zwölften Ausführungsbeispiel anwendbar. Für die Getriebe G gemäß dem elften und zwölften Ausführungsbeispiel ist in Fig. 14 ein zusätzliches Schaltschema dargestellt, welches die Bildung von vier elektrisch antreibbaren Gängen E1 bis E4, sowie von zwei Überlagerungsbetriebsmodi EDA1, EDA2 angibt. Die vier elektrisch antreibbaren Gänge E1 bis E4 beziehen sich auf feste Übersetzungsverhältnisse zwischen dem dritten Element E32 des zweiten Planetenradsatzes P2 und der Abtriebswelle GW2. In diesen vier elektrisch antreibbaren Vorwärtsgängen E1 bis E4 sind das vierte Schaltelement 14 und das fünfte Schaltelement 17 geöffnet, so dass bei Antrieb des dritten Elements E32 des zweiten Planetenradsatzes P2 durch die elektrische Maschine EM keine Rückwirkung auf die Antriebswelle GW1 erfolgt. Die Anschlusswelle AN sowie die Trennkupplung K0 können daher für die Getriebe G gemäß dem elften und zwölften Ausführungsbeispiel entfallen. In den Überlagerungsbetriebsmodi EDA1, EDA2 ist ein stufenloser Betrieb des Getriebes G möglich, so dass das Übersetzungsverhältnis zwischen der Antriebswelle GW1 und der Abtriebswelle GW2 in weiten Grenzen stufenlos variierbar ist. Dabei ist das vierte Schaltelement 14 geschlossen, so dass eine Drehzahl der getriebeexternen Antriebseinheit auf das zweite Element E22 des zweiten Planetenradsatzes P2 übertragen wird. Bei derart vorgegebener Drehzahl des zweiten Elementes E22 des zweiten Planetenradsatzes P2 und durch Vorgabe der Drehzahl des Rotors R ist die Drehzahl des ersten Elements E12 des zweiten Planetenradsatzes P2 stufenlos veränderbar. Die am ersten Element E12 des zweiten Planetenradsatzes P2 dabei anliegende Leistung kann durch Schließen des dritten Schaltelements 06 oder des sechsten Schaltelementes 67 auf das dritte Element E31 des ersten Planetenradsatzes P1 übertragen werden, und damit auf die Antriebswelle GW2. In den Überlagerungsbetriebsmodi EDA1, EDA2 ist somit beispielsweise ein Anfahrvorgang eines Kraftfahrzeuges darstellbar, welches mit einem Getriebe G gemäß dem elften oder zwölften Ausführungsbeispiel ausgestaltet ist.

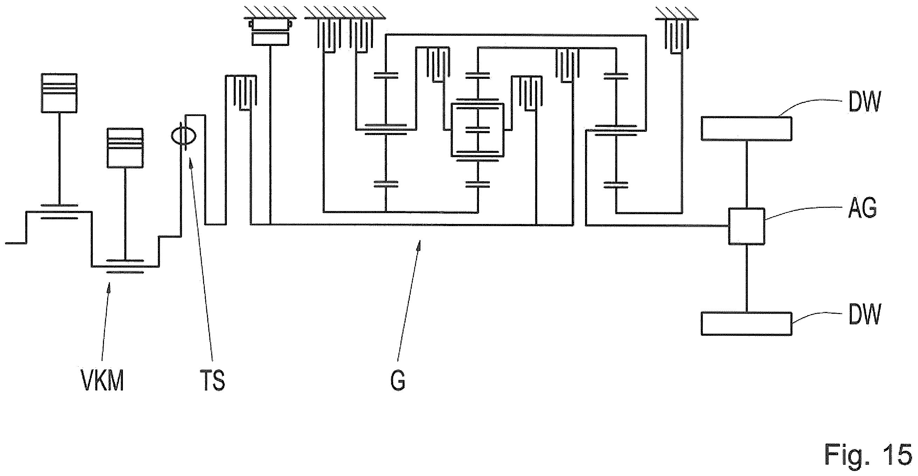

Fig. 15 zeigt schematisch einen Antriebsstrang eines Kraftfahrzeugs. Eine Verbrennungskraftmaschine VKM ist über einen Torsionsschwingungsdämpfer TS mit der Anschlusswelle AN des Getriebes G gemäß dem neunten Ausführungsbeispiel verbunden. Die Abtriebswelle GW2 des Getriebes G wirkt auf ein Achsgetriebe AG von dem ausgehend die an der Abtriebswelle GW2 anliegende Leistung auf Antriebsräder DW des Kraftfahrzeuges verteilt wird. Die in Fig. 15 gewählte Darstellung ist lediglich beispielhaft anzusehen. Der Antriebsstrang könnte mit jedem der gegenständlichen Ausführungsbeispiele, mit oder ohne elektrische Maschine EM, ausgeführt sein. Der Antriebsstrang könnte auch einen hydrodynamischen Drehmomentwandler enthalten, welcher beispielsweise zwischen der elektrischen Maschine EM und der Abtriebswelle GW1 angeordnet ist. Ein solcher Drehmomentwandler kann auch eine Überbrückungskupplung umfassen. Der Fachmann wird Anordnung und räumliche Lage der einzelnen Komponenten des Antriebsstranges je nach den äußeren Randbedingungen frei konfigurieren.

### Bezugszeichen

- G: Getriebe
- GG: Drehfestes Element
- P1: Erster Planetenradsatz
- E11: Erstes Element des ersten Planetenradsatzes
- E21: Zweites Element des ersten Planetenradsatzes
- E31: Drittes Element des ersten Planetenradsatzes
- P2: Zweiter Planetenradsatz
- E12: Erstes Element des zweiten Planetenradsatzes
- E22: Zweites Element des zweiten Planetenradsatzes
- E32: Drittes Element des zweiten Planetenradsatzes
- P3: Dritter Planetenradsatz
- E13: Erstes Element des dritten Planetenradsatzes
- E23: Zweites Element des dritten Planetenradsatzes
- E33: Drittes Element des dritten Planetenradsatzes
- GW1: Antriebswelle
- GW2: Abtriebswelle
- GW1-A: Äußere Schnittstelle der Antriebswelle
- GW2-A: Äußere Schnittstelle der Abtriebswelle
- V1: Erste Koppelung
- V2: Zweite Koppelung
- 03: Erstes Schaltelement
- 05: Zweites Schaltelement
- 06: Drittes Schaltelement
- 14: Viertes Schaltelement
- 17: Fünftes Schaltelement
- 67: Sechstes Schaltelement
- 1: Erster Vorwärtsgang
- 2: Zweiter Vorwärtsgang
- 3.1: Dritter Vorwärtsgang
- 3.2: Dritter Vorwärtsgang
- 3.3: Dritter Vorwärtsgang
- 3.4: Dritter Vorwärtsgang
- 4: Vierter Vorwärtsgang
- 5: Fünfter Vorwärtsgang
- 6: Sechster Vorwärtsgang
- 7: Siebter Vorwärtsgang
- R1: Erster Rückwärtsgang
- R2: Zweiter Rückwärtsgang
- E1: Erster elektrisch antreibbarer Vorwärtsgang
- E2: Zweiter elektrisch antreibbarer Vorwärtsgang
- E3: Dritter elektrisch antreibbarer Vorwärtsgang
- E4: Vierter elektrisch antreibbarer Vorwärtsgang
- EDA1: Erster Überlagerungsbetriebsmodus
- EDA2: Zweiter Überlagerungsbetriebsmodus
- EM: Elektrische Maschine
- S: Stator
- R: Rotor
- AN: Anschlusswelle
- K0: Trennkupplung
- VKM: Verbrennungskraftmaschine
- TS: Torsionsschwingungsdämpfer
- AG: Achsgetriebe
- DW: Antriebsräder

## Patentansprüche

1. Getriebe (G) für ein Kraftfahrzeug, wobei das Getriebe (G) eine Antriebswelle (GW1), eine Abtriebswelle (GW2), einen ersten, zweiten und dritten Planetenradsatz (P1, P2, P3) sowie ein erstes, zweites, drittes, viertes, fünftes und sechstes Schaltelement (03, 05, 06, 14, 17, 67) aufweist,
- wobei die Planetenradsätze (P1, P2, P3) je ein erstes Element (E11, E12, E13), ein zweites Element (E21, E22, E23) und ein drittes Element (E31, E32, E33) aufweisen, wobei das erste Element (E11, E12, E13) durch ein Sonnenrad des jeweiligen Planetenradsatzes (P1, P2, P3) gebildet ist, wobei das zweite Element (E21, E22, E23) im Falle eines Minus-Radsatzes durch einen Steg und im Falle eines Plus-Radsatzes durch ein Hohlrad des jeweiligen Planetenradsatzes (P1, P2, P3) gebildet ist, wobei das dritte Element (E31, E32, E33) im Falle eines Minus-Radsatzes durch das Hohlrad und im Falle eines Plus-Radsatzes durch den Steg des jeweiligen Planetenradsatzes (P1, P2, P3) gebildet ist,
- wobei die Abtriebswelle (GW2) mit dem dritten Element (E31) des ersten Planetenradsatzes (P1) und mit dem zweiten Element (E23) des dritten Planetenradsatzes (P3) ständig verbunden ist,
- wobei das erste Element (E11) des ersten Planetenradsatzes (P1) mit dem ersten Element (E12) des zweiten Planetenradsatzes (P2) ständig verbunden ist,
- wobei das Getriebe (G) eine erste Koppelung (V1) und eine zweite Koppelung (V2) aufweist, wobei die erste Koppelung (V1) zwischen dem ersten Element (E13) des dritten Planetenradsatzes (P3) und einem drehfesten Element (GG) des Getriebes (G) besteht, wobei die zweite Koppelung (V2) zwischen dem zweiten Element (E22) des zweiten Planetenradsatzes (P2) und dem dritten Element (E33) des dritten Planetenradsatzes (P3) besteht, wobei eine der beiden Koppelungen (V1, V2) durch eine ständig drehfeste Verbindung gebildet ist und die verbleibende der beiden Koppelungen (V1, V2) durch eine mittels dem ersten Schaltelement (03) schaltbare Verbindung gebildet ist,
- wobei durch Schließen des zweiten Schaltelements (05) das erste Element (E11) des ersten Planetenradsatzes (P1) drehfest festsetzbar ist,
- wobei durch Schließen des dritten Schaltelements (06) das zweite Element (E21) des ersten Planetenradsatzes (P1) drehfest festsetzbar ist,
- wobei durch Schließen des vierten Schaltelements (14) die Antriebswelle (GW1) mit dem zweiten Element (E22) des zweiten Planetenradsatzes (P2) verbindbar ist,
- wobei durch Schließen des fünften Schaltelements (17) die Antriebswelle (GW1) mit dem dritten Element (E32) des zweiten Planetenradsatzes (P2) verbindbar ist,
- und wobei durch Schließen des sechsten Schaltelements (67) das zweite Element (E21) des ersten Planetenradsatzes (P1) mit dem dritten Element (E32) des zweiten Planetenradsatzes (P2) verbindbar ist.

2. Getriebe (G) nach Anspruch 1, **dadurch gekennzeichnet, dass** der erste und der dritte Planetenradsatz (P1, P3) jeweils als ein Minus-Radsatz ausgebildet sind, wobei der zweite Planetenradsatz (P2) als ein Plus-Radsatz ausgebildet ist.

3. Getriebe (G) nach Anspruch 1 oder Anspruch 2, **dadurch gekennzeichnet, dass** durch selektives Schließen von drei der sechs Schaltelemente (03, 05, 06, 14, 17, 67) sieben Vorwärtsgänge (1-7) zwischen der Antriebswelle (GW1) und der Abtriebswelle (GW2) schaltbar sind, wobei sich
- der erste Vorwärtsgang (1) durch Schließen des ersten Schaltelements (03), des dritten Schaltelements (06) und des fünften Schaltelements (17),
- der zweite Vorwärtsgang (2) durch Schließen des ersten Schaltelements (03), des zweiten Schaltelements (05) und des fünften Schaltelements (17),
- der dritte Vorwärtsgang (3.1, 3.2, 3.3, 3.4) durch Schließen des ersten Schaltelements (03), des vierten Schaltelements (14) und einem weiteren der sechs Schaltelemente (05, 06, 17, 67),
- der vierte Vorwärtsgang (4) durch Schließen des ersten Schaltelements (03), des fünften Schaltelements (17) und des sechsten Schaltelements (67),
- der fünfte Vorwärtsgang (5) durch Schließen des vierten Schaltelements (14), des fünften Schaltelements (17) und des sechsten Schaltelements (67),
- der sechste Vorwärtsgang (6) durch Schließen des zweiten Schaltelements (05), des fünften Schaltelements (17) und des sechsten Schaltelements (67), und
- der siebente Vorwärtsgang (7) sich durch Schließen des zweiten Schaltelements (05), des vierten Schaltelements (14) und des sechsten Schaltelements (67) ergibt.

4. Getriebe (G) nach einem der vorangehenden Ansprüche, **dadurch gekennzeichnet, dass** ein erster Rückwärtsgang (R1) zwischen der Antriebswelle (GW1) und der Abtriebswelle (GW2) durch Schließen des dritten Schaltelements (06), des vierten Schaltelements (14) und des fünften Schaltelements (17) ausbildbar ist, wobei ergänzend oder alternativ zum ersten Rückwärtsgang (R1) ein zweiter Rückwärtsgang (R2) durch Schließen des dritten Schaltelements (06), des vierten Schaltelements (14) und des sechsten Schaltelements (67) ausbildbar ist.

5. Getriebe (G) nach einem der vorangehenden Ansprüche, **dadurch gekennzeichnet, dass** das dritte Schaltelement (06) als formschlüssiges Schaltelement ausgebildet ist.

6. Getriebe (G) nach einem der vorangehenden Ansprüche, **dadurch gekennzeichnet, dass** das fünfte Schaltelement (17) als formschlüssiges Schaltelement ausgebildet ist.

7. Getriebe (G) nach einem der vorangehenden Ansprüche, **dadurch gekennzeichnet, dass** äußere Schnittstellen (GW1-A, GW2-A) der Antriebswelle (GW1) und der Abtriebswelle (GW2) koaxial zueinander und an gegenüberliegenden axialen Enden des Getriebes (G) angeordnet sind, wobei von den drei Planetenradsätzen (P1, P2, P3) der dritte Planetenradsatz (P3) den größten axialen Abstand zur äußeren Schnittstelle (GW1-A) der Antriebswelle (GW1) aufweist.

8. Getriebe (G) nach einem der Ansprüche 1 bis 6, **dadurch gekennzeichnet, dass** äußere Schnittstellen (GW1-A, GW2-A) der Antriebswelle (GW1) und der Abtriebswelle (GW2) koaxial zueinander angeordnet sind, wobei von den drei Planetenradsätzen (P1, P2, P3) der dritte Planetenradsatz (P3) den kürzesten axialen Abstand zur äußeren Schnittstelle (GW1-A) der Antriebswelle (GW1) aufweist.

9. Getriebe (G) nach einem der vorangehenden Ansprüche, **dadurch gekennzeichnet, dass** das Getriebe (G) eine elektrische Maschine (EM) mit einem Stator (S) und einem Rotor (R) aufweist, wobei der Rotor (R) entweder mit der Antriebswelle (GW1) oder mit dem dritten Element (E32) des zweiten Planetenradsatzes (P2) ständig verbunden ist.

10. Getriebe (G) nach Anspruch 9, **dadurch gekennzeichnet, dass** das Getriebe (G) eine Anschlusswelle (AN) aufweist, wobei die Anschlusswelle (AN) über eine Trennkupplung (K0) mit der Antriebswelle (GW1) verbindbar ist.

11. Getriebe (G) nach Anspruch 9, **dadurch gekennzeichnet, dass** der Rotor (R) mit dem ersten Element (E32) des zweiten Planetenradsatzes (P2) ständig verbunden ist, wobei durch selektives Schließen von zwei der sechs Schaltelemente (03, 05, 06, 14, 17, 67) vier elektrisch antreibbare Vorwärtsgänge (E1-E4) zwischen dem dritten Element (E32) des zweiten Planetenradsatzes (P2) und der Abtriebswelle (GW2) schaltbar sind, wobei sich
- der erste elektrisch antreibbare Vorwärtsgang (E1) durch Schließen des ersten Schaltelements (03) und des dritten Schaltelements (06),
- der zweite elektrisch antreibbare Vorwärtsgang (E2) durch Schließen des ersten Schaltelements (03) und des zweiten Schaltelements (05),
- der dritte elektrisch antreibbare Vorwärtsgang (E3) durch Schließen des ersten Schaltelements (03) und des sechsten Schaltelements (67), und
- der vierte elektrisch antreibbare Vorwärtsgang (E4) sich durch Schließen des zweiten Schaltelements (05) und des sechsten Schaltelements (67) ergibt.

12. Getriebe (G) nach Anspruch 9, **dadurch gekennzeichnet, dass** der Rotor (R) mit dem ersten Element (E32) des zweiten Planetenradsatzes (P2) ständig verbunden ist, wobei durch Schließen des vierten Schaltelements (14) und entweder des sechsten oder des dritten Schaltelements (67, 06) zumindest ein Überlagerungsbetriebsmodus (EDA1, EDA2) bereitstellbar ist, wobei in dem zumindest einen Überlagerungsbetriebsmodus (EDA1, EDA2) die an der Abtriebswelle (GW2) anliegende Drehzahl bei vorgegebener Drehzahl der Antriebswelle (GW1) durch Variation der Drehzahl des Rotors (R) stufenlos veränderbar ist.

13. Antriebsstrang für ein Kraftfahrzeug, wobei der Antriebsstrang eine Verbrennungskraftmaschine (VKM), ein Getriebe (G) nach einem der Ansprüche 1 bis 12 sowie ein mit Rädern (DW) des Kraftfahrzeugs verbundenes Achsgetriebe (AG) aufweist, wobei die Antriebswelle (GW1) des Getriebes (G) über einen Torsionsschwingungsdämpfer (TS) entweder direkt oder über die Trennkupplung (K0) mit der Verbrennungskraftmaschine (VKM) drehelastisch verbunden ist, und wobei die Abtriebswelle (GW2) des Getriebes (G) mit dem Achsgetriebe (AG) antriebswirkverbunden ist.

## Claims

1. Transmission (G) for a motor vehicle, the transmission (G) having a drive shaft (GW1), an output shaft (GW2), a first, second and third planetary gear set (P1, P2, P3), and a first, second, third, fourth, fifth and sixth shifting element (03, 05, 06, 14, 17, 67),
- the planetary gear sets (P1, P2, P3) in each case having a first element (E11, E12, E13), a second element (E21, E22, E23) and a third element (E31, E32, E33), the first element (E11, E12, E13) being formed by way of a sun gear of the respective planetary gear set (P1, P2, P3), the second element (E21, E22, E23) being formed by way of a spider in the case of a negative gear set and by way of an internal gear of the respective planetary gear set (P1, P2, P3) in the case of a positive gear set, the third element (E31, E32, E33) being formed by way of the internal gear in the case of a negative gear set and by way of the spider of the respective planetary gear set (P1, P2, P3) in the case of a positive gear set,
- the output shaft (GW2) being connected permanently to the third element (E31) of the first planetary gear set (P1) and to the second element (E23) of the third planetary gear set (P3),
- the first element (E11) of the first planetary gear set (P1) being connected permanently to the first element (E12) of the second planetary gear set (P2),
- the transmission (G) having a first coupling (V1) and a second coupling (V2), the first coupling (V1) existing between the first element (E13) of the third planetary gear set (P3) and a rotationally locked element (GG) of the transmission (G), the second coupling (V2) existing between the second element (E22) of the second planetary gear set (P2) and the third element (E33) of the third planetary gear set (P3), one of the two couplings (V1, V2) being formed by way of a permanently rotationally locked connection, and the remaining one of the two couplings (V1, V2) being formed by way of a connection which can be selected by means of the first shifting element (03),
- it being possible for the first element (E11) of the first planetary gear set (P1) to be fixed in a rotationally locked manner by way of closure of the second shifting element (05),
- it being possible for the second element (E21) of the first planetary gear set (P1) to be fixed in a rotationally locked manner by way of closure of the third shifting element (06),
- it being possible for the drive shaft (GW1) to be connected to the second element (E22) of the second planetary gear set (P2) by way of closure of the fourth shifting element (14),
- it being possible for the drive shaft (GW1) to be connected to the third element (E32) of the second planetary gear set (P2) by way of closure of the fifth shifting element (17),
- and it being possible for the second element (E21) of the first planetary gear set (P1) to be connected to the third element (E32) of the second planetary gear set (P2) by way of closure of the sixth shifting element (67).

2. Transmission (G) according to Claim 1, **characterized in that** the first and the third planetary gear set (P1, P3) are configured in each case as a negative gear set, the second planetary gear set (P2) being configured as a positive gear set.

3. Transmission (G) according to Claim 1 or Claim 2, **characterized in that** seven forward gears (1-7) can be selected between the drive shaft (GW1) and the output shaft (GW2) by way of selective closure of three of the six shifting elements (03, 05, 06, 14, 17, 67),
- the first forward gear (1) resulting by way of closure of the first shifting element (03), the third shifting element (06) and the fifth shifting element (17),
- the second forward gear (2) resulting by way of closure of the first shifting element (03), the second shifting element (05) and the fifth shifting element (17),
- the third forward gear (3.1, 3.2, 3.3, 3.4) resulting by way of closure of the first shifting element (03), the fourth shifting element (14) and a further one of the six shifting elements (05, 06, 17, 67),
- the fourth forward gear (4) resulting by way of closure of the first shifting element (03), the fifth shifting element (17) and the sixth shifting element (67),
- the fifth forward gear (5) resulting by way of closure of the fourth shifting element (14), the fifth shifting element (17) and the sixth shifting element (67),
- the sixth forward gear (6) resulting by way of closure of the second shifting element (05), the fifth shifting element (17) and the sixth shifting element (67), and
- the seventh forward gear (7) resulting by way of closure of the second shifting element (05), the fourth shifting element (14) and the sixth shifting element (67).

4. Transmission (G) according to one of the preceding claims, **characterized in that** a first reverse gear (R1) can be configured between the drive shaft (GW1) and the output shaft (GW2) by way of closure of the third shifting element (06), the fourth shifting element (14) and the fifth shifting element (17), it being possible, in addition or as an alternative to the first reverse gear (R1), for a second reverse gear (R2) to be configured by way of closure of the third shifting element (06), the fourth shifting element (14) and the sixth shifting element (67).

5. Transmission (G) according to one of the preceding claims, **characterized in that** the third shifting element (06) is configured as a positively locking shifting element.

6. Transmission (G) according to one of the preceding claims, **characterized in that** the fifth shifting element (17) is configured as a positively locking shifting element.

7. Transmission (G) according to one of the preceding claims, **characterized in that** outer interfaces (GW1-A, GW2-A) of the drive shaft (GW1) and the output shaft (GW2) are arranged coaxially with respect to one another and at opposite axial ends of the transmission (G), the third planetary gear set (P3), of the three planetary gear set (P1, P2, P3), being at the greatest axial spacing from the outer interface (GW1-A) of the drive shaft (GW1).

8. Transmission (G) according to one of Claims 1 to 6, **characterized in that** outer interfaces (GW1-A, GW2-A) of the drive shaft (GW1) and the output shaft (GW2) are arranged coaxially with respect to one another, the third planetary gear set (P3), of the three planetary gear sets (P1, P2, P3), being at the shortest axial spacing from the outer interface (GW1-A) of the drive shaft (GW1).

9. Transmission (G) according to one of the preceding claims, **characterized in that** the transmission (G) has an electric machine (EM) with a stator (S) and a rotor (R), the rotor (R) being connected permanently either to the drive shaft (GW1) or to the third element (E32) of the second planetary gear set (P2).

10. Transmission (G) according to Claim 9, **characterized in that** the transmission (G) has a connecting shaft (AN), it being possible for the connecting shaft (AN) to be connected to the drive shaft (GW1) via a separating clutch (K0).

11. Transmission (G) according to Claim 9, **characterized in that** the rotor (R) is connected permanently to the first element (E32) of the second planetary gear set (P2), it being possible for four electrically drivable forward gears (E1-E4) to be selected between the third element (E32) of the second planetary gear set (P2) and the output shaft (GW2) by way of selective closure of two of the six shifting elements (03, 05, 06, 14, 17, 67),
- the first electrically drivable forward gear (E1) resulting by way of closure of the first shifting element (03) and the third shifting element (06),
- the second electrically drivable forward gear (E2) resulting by way of closure of the first shifting element (03) and the second shifting element (05),
- the third electrically drivable forward gear (E3) resulting by way of closure of the first shifting element (03) and the sixth shifting element (67), and
- the fourth electrically drivable forward gear (E4) resulting by way of closure of the second shifting element (05) and the sixth shifting element (67).

12. Transmission (G) according to Claim 9, **characterized in that** the rotor (R) is connected permanently to the first element (E32) of the second planetary gear set (P2), it being possible for at least one superimposition operating mode (EDA1, EDA2) to be provided by way of closure of the fourth shifting element (14) and either the sixth or the third shifting element (67, 06), it being possible, in the at least one superimposition operating mode (EDA1, EDA2), for the rotational speed which prevails at the output shaft (GW2) to be changed in an infinitely variable manner in the case of a predefined rotational speed of the drive shaft (GW1) by way of variation of the rotational speed of the rotor (R) .

13. Drive train for a motor vehicle, the drive train having an internal combustion engine (VKM), a transmission (G) according to one of Claims 1 to 12, and an axle drive (AG) which is connected to wheels (DW) of the motor vehicle, the drive shaft (GW1) of the transmission (G) being connected in a torsionally elastic manner via a torsional vibration damper (TS) either directly or via the separating clutch (K0) to the internal combustion engine (VKM), and the output shaft (GW2) of the transmission (G) being operationally connected in drive terms to the axle drive (AG).

## Revendications

1. Boîte de vitesses (G) pour un véhicule automobile, la boîte de vitesses (G) comprenant un arbre d'entraînement (GW1), un arbre entraîné (GW2), un premier, deuxième et troisième train planétaire (P1, P2, P3), ainsi qu'un premier, deuxième, troisième, quatrième, cinquième et sixième élément de commutation (03, 05, 06, 14, 17, 67),
- les trains planétaires (P1, P2, P3) comprenant chacun un premier élément (E11, E12, E13), un deuxième élément (E21, E22, E23) et un troisième élément (E31, E32, E33), le premier élément (E11, E12, E13) étant formé par une roue solaire du train planétaire respectif (P1, P2, P3), le deuxième élément (E21, E22, E23) étant formé dans le cas d'un train négatif par une traverse et dans le cas d'un train positif par une couronne du train planétaire respectif (P1, P2, P3), le troisième élément (E31, E32, E33) étant formé dans le cas d'un train négatif par la couronne et dans le cas d'un train positif par la traverse du train planétaire respectif (P1, P2, P3),
- l'arbre entraîné (GW2) étant relié en permanence avec le troisième élément (E31) du premier train planétaire (P1) et avec le deuxième élément (E23) du troisième train planétaire (P3),
- le premier élément (E11) du premier train planétaire (P1) étant relié en permanence avec le premier élément (E12) du deuxième train planétaire (P2),
- la boîte de vitesses (G) comprenant un premier couplage (V1) et un deuxième couplage (V2), le premier couplage (V1) existant entre le premier élément (E13) du troisième train planétaire (P3) et un élément immobile en rotation (GG) de la boîte de vitesses (G), le deuxième couplage (V2) existant entre le deuxième élément (E22) du deuxième train planétaire (P2) et le troisième élément (E33) du troisième train planétaire (P3), un des deux couplages (V1, V2) étant formé par une liaison immobile en rotation en permanence et le couplage restant parmi les deux couplages (V1, V2) étant formé par une liaison commutable au moyen du premier élément de commutation (03),
- le premier élément (E11) du premier train planétaire (P1) pouvant être fixé de manière immobile en rotation par fermeture du deuxième élément de commutation (05),
- le deuxième élément (E21) du premier train planétaire (P1) pouvant être fixé de manière immobile en rotation par fermeture du troisième élément de commutation (06),
- l'arbre d'entraînement (GW1) pouvant être relié avec le deuxième élément (E22) du deuxième train planétaire (P2) par fermeture du quatrième élément de commutation (14),
- l'arbre d'entraînement (GW1) pouvant être relié avec le troisième élément (E32) du deuxième train planétaire (P2) par fermeture du cinquième élément de commutation (17),
- et le deuxième élément (E21) du premier train planétaire (P1) pouvant être relié avec le troisième élément (E32) du deuxième train planétaire (P2) par fermeture du sixième élément de commutation (67).

2. Boîte de vitesses (G) selon la revendication 1, **caractérisée en ce que** le premier et le troisième train planétaire (P1, P3) sont chacun configurés sous la forme d'un train négatif, le deuxième train planétaire (P2) étant configuré sous la forme d'un train positif.

3. Boîte de vitesses (G) selon la revendication 1 ou la revendication 2, **caractérisée en ce que** sept rapports avant (1-7) entre l'arbre d'entraînement (GW1) et l'arbre entraîné (GW2) sont commutables par fermeture sélective de trois parmi les six éléments de commutation (03, 05, 06, 14, 17, 67),
- le premier rapport avant (1) étant obtenu par fermeture du premier élément de commutation (03), du troisième élément de commutation (06) et du cinquième élément de commutation (17),
- le deuxième rapport avant (2) étant obtenu par fermeture du premier élément de commutation (03), du deuxième élément de commutation (05) et du cinquième élément de commutation (17),
- le troisième rapport avant (3.1, 3.2, 3.3, 3.4) étant obtenu par fermeture du premier élément de commutation (03), du quatrième élément de commutation (14) et d'un autre parmi les six éléments de commutation (05, 06, 17, 67),
- le quatrième rapport avant (4) étant obtenu par fermeture du premier élément de commutation (03), du cinquième élément de commutation (17) et du sixième élément de commutation (67),
- le cinquième rapport avant (5) étant obtenu par fermeture du quatrième élément de commutation (14), du cinquième élément de commutation (17) et du sixième élément de commutation (67),
- le sixième rapport avant (6) étant obtenu par fermeture du deuxième élément de commutation (05), du cinquième élément de commutation (17) et du sixième élément de commutation (67), et
- le septième rapport avant (7) étant obtenu par fermeture du deuxième élément de commutation (05), du quatrième élément de commutation (14) et du sixième élément de commutation (67).

4. Boîte de vitesses (G) selon l'une quelconque des revendications précédentes, **caractérisée en ce qu'**un premier rapport arrière (R1) entre l'arbre d'entraînement (GW1) et l'arbre entraîné (GW2) peut être formé par fermeture du troisième élément de commutation (06), du quatrième élément de commutation (14) et du cinquième élément de commutation (17), en complément ou en variante du premier rapport arrière (R1), un deuxième rapport arrière (R2) pouvant être formé par fermeture du troisième élément de commutation (06), du quatrième élément de commutation (14) et du sixième élément de commutation (67).

5. Boîte de vitesses (G) selon l'une quelconque des revendications précédentes, **caractérisée en ce que** le troisième élément de commutation (06) est configuré sous la forme d'un élément de commutation à complémentarité de forme.

6. Boîte de vitesses (G) selon l'une quelconque des revendications précédentes, **caractérisée en ce que** le cinquième élément de commutation (17) est configuré sous la forme d'un élément de commutation à complémentarité de forme.

7. Boîte de vitesses (G) selon l'une quelconque des revendications précédentes, **caractérisée en ce que** des jonctions extérieures (GW1-A, GW2-A) de l'arbre d'entraînement (GW1) et de l'arbre entraîné (GW2) sont agencées coaxialement l'une de l'autre et à des extrémités axiales opposées de la boîte de vitesses (G) ; parmi les trois trains planétaires (P1, P2, P3), le troisième train planétaire (P3) présentant l'écart axial le plus grand avec la jonction extérieure (GW1-A) de l'arbre d'entraînement (GW1).

8. Boîte de vitesses (G) selon l'une quelconque des revendications 1 à 6, **caractérisée en ce que** des jonctions extérieures (GW1-A, GW2-A) de l'arbre d'entraînement (GW1) et de l'arbre entraîné (GW2) sont agencées coaxialement l'une de l'autre ; parmi les trois trains planétaires (P1, P2, p3), le troisième train planétaire (P3) présentant l'écart axial le plus court avec la jonction extérieure (GW1-A) de l'arbre d'entraînement (GW1).

9. Boîte de vitesses (G) selon l'une quelconque des revendications précédentes, **caractérisée en ce que** la boîte de vitesses (G) comprend un moteur électrique (EM) muni d'un stator (S) et d'un rotor (R), le rotor (R) étant relié en permanence soit avec l'arbre d'entraînement (GW1), soit avec le troisième élément (E32) du deuxième train planétaire (P2).

10. Boîte de vitesses (G) selon la revendication 9, **caractérisée en ce que** la boîte de vitesses (G) comprend un arbre de raccordement (AN), l'arbre de raccordement (AN) pouvant être relié avec l'arbre d'entraînement (GW1) par l'intermédiaire d'un embrayage séparateur (K0).

11. Boîte de vitesses (G) selon la revendication 9, **caractérisée en ce que** le rotor (R) est relié en permanence avec le premier élément (E32) du deuxième train planétaire (P2) ; quatre rapports avant entraînables électriquement (E1-E4) entre le troisième élément (E32) du deuxième train planétaire (P2) et l'arbre entraîné (GW2) étant commutables par fermeture sélective de deux parmi les six éléments de commutation (03, 05, 06, 14, 17, 67),
- le premier rapport avant entraînable électriquement (E1) étant obtenu par fermeture du premier élément de commutation (03) et du troisième élément de commutation (06),
- le deuxième rapport avant entraînable électriquement (E2) étant obtenu par fermeture du premier élément de commutation (03) et du deuxième élément de commutation (05),
- le troisième rapport avant entraînable électriquement (E3) étant obtenu par fermeture du premier élément de commutation (03) et du sixième élément de commutation (67), et
- le quatrième rapport avant entraînable électriquement (E4) étant obtenu par fermeture du deuxième élément de commutation (05) et du sixième élément de commutation (67).

12. Boîte de vitesses (G) selon la revendication 9, **caractérisée en ce que** le rotor (R) est relié en permanence avec le premier élément (E32) du deuxième train planétaire (P2) ; au moins un mode d'exploitation à superposition (EDA1, EDA2) pouvant être mis à disposition par fermeture du quatrième élément de commutation (14) et soit du sixième, soit du troisième élément de commutation (67, 06) ; dans ledit au moins un mode d'exploitation à superposition (EDA1, EDA2), la vitesse de rotation appliquée à l'arbre entraîné (GW2) à une vitesse de rotation prédéterminée de l'arbre d'entraînement (GW1) étant modifiable en continu par variation de la vitesse de rotation du rotor (R).

13. Chaîne cinématique pour un véhicule automobile, la chaîne cinématique comprenant un moteur à combustion (VKM), une boîte de vitesses (G) selon l'une quelconque des revendications 1 à 12, ainsi qu'une transmission d'essieu (AG) reliée avec des roues (DW) du véhicule automobile, l'arbre d'entraînement (GW1) de la boîte de vitesses (G) étant relié de manière élastique en rotation avec le moteur à combustion (VKM) par l'intermédiaire d'un amortisseur de vibrations à torsion (TS) soit directement, soit par l'intermédiaire de l'embrayage séparateur (K0), et l'arbre entraîné (GW2) de la boîte de vitesses (G) étant relié pour l'entraînement avec la transmission d'essieu (AG).
